# EUROPEAN PATENT APPLICATION

(11) **EP 4 768 548 A1**
(43) Date of publication of application: **01.07.2026**
(21) Application number: 25227163.0
(22) Date of filing: 24.12.2025
(51) Int. Cl.: C09D 11/40, C09D 11/30, C09D 11/38, B41J 3/407, B41J 29/17

(54) **SET, CLEANING LIQUID, AND CLEANING METHOD**

(30) Priority: 27.12.2024 JP 2024231738
(71) Applicant: Seiko Epson Corporation, Tokyo 160-8801 (JP)
(72) Inventor: OKADA, Hideki, Suwa-shi, 392-8502 (JP); MIYASA, Ryota, Suwa-shi, 392-8502 (JP)
(74) Representative: Lewis Silkin LLP

(57) **Abstract**

A set of an ink jet composition and a cleaning liquid, for use in an ink jet textile printing recording apparatus, in which the cleaning liquid contains a glycol ether compound, a polyoxyalkylene alkyl ether compound, and water, the ink jet composition contains resin particles and water, the cleaning liquid has a surface tension of 40 mN/m or less at 25°C, and the cleaning liquid is used for cleaning a fabric transport member of the ink jet textile printing recording apparatus.

## Description

The present application is based on, and claims priority from JP Application Serial Number 2024-231738, filed December 27, 2024, the disclosure of which is hereby incorporated by reference herein in its entirety.

### BACKGROUND

### 1. Technical Field

The present disclosure relates to a set, a cleaning liquid, and a cleaning method.

### 2. Related Art

Attempts are made to apply an ink jet method not only to recording images on paper and the like but also to textile printing on fabrics, and various ink jet textile printing methods are studied. Further, various studies have also been conducted on ink jet recording apparatuses and recording methods applicable to textile printing on fabrics.

For example, JP-A-2015-199299 discloses an ink jet recording apparatus that incorporates an ink containing a pigment and a resin, and a maintenance liquid.

In an ink jet recording apparatus, a belt may be used as a mechanism for transporting a fabric. In this case, ink is discharged from an ink jet head and adheres to the belt with the fabric placed thereon. Various innovations are devised for such belts. For example, a method is proposed in which glue (grounding material) is applied to the surface of the belt to transport fabric media by adhesive force.

When a glue layer is formed at the belt surface, the adhesive force causes the fabric to adhere to the belt, thus increasing the stability of the fabric during transport. On the other hand, as the adhesive force of the glue surface decreases, it is sometimes difficult to maintain stable fabric transport. It is found that this decrease in the adhesive force of the glue surface is caused by lint or fluff separating from the fabric, colorants and fixing materials contained in ink that adhere through the fabric, and various functional materials that are fixed to the glue surface. In addition, when the fabric transport becomes unstable, such as when the adhesive force of the glue surface decreases, uneven density may occur during image formation.

### SUMMARY

According to an aspect of the present disclosure, there are provided a set of an ink jet composition and a cleaning liquid, for use in an ink jet textile printing recording apparatus, in which the cleaning liquid contains a glycol ether compound, a polyoxyalkylene alkyl ether compound, and water, the ink jet composition contains resin particles and water, the cleaning liquid has a surface tension of 40 mN/m or less at 25°C, and the cleaning liquid is used for cleaning a fabric transport member of the ink jet textile printing recording apparatus.

According to the present disclosure, there is provided a cleaning liquid for use in an ink jet textile printing recording apparatus, in which the cleaning liquid contains a glycol ether compound, a polyoxyalkylene alkyl ether compound, and water, the cleaning liquid has a surface tension of 40 mN/m or less at 25°C, and the cleaning liquid is used for cleaning a fabric transport member of the ink jet textile printing recording apparatus, to which an ink jet composition is adhered.

According to the present disclosure, there is provided a cleaning method for an ink jet textile printing recording apparatus, the cleaning method for a fabric transport member of the ink jet textile printing recording apparatus, in which the fabric transport member is configured such that an ink jet composition is adhered to a fabric by an ink jet method with the fabric placed on the fabric transport member, and the method includes adhering a cleaning liquid to the fabric transport member and cleaning the fabric transport member.

### BRIEF DESCRIPTION OF THE DRAWINGS

FIG. 1 is a schematic diagram illustrating a schematic overall configuration of a recording apparatus to which a set according to an embodiment can be applied.

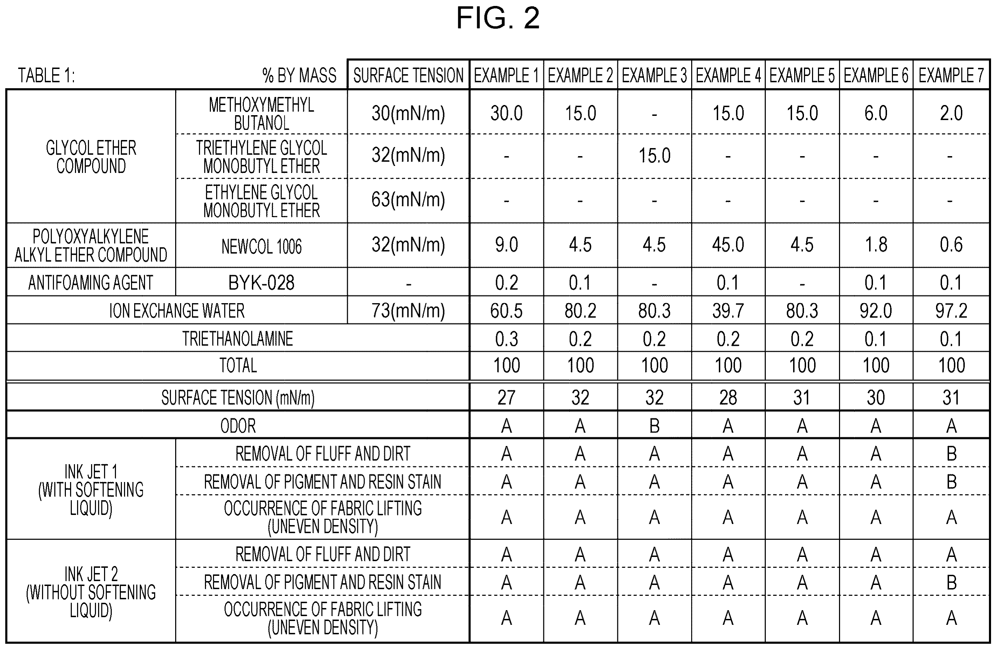

FIG. 2 is a table (Table 1) illustrating a composition and evaluation results of a cleaning liquid in a set of an example.

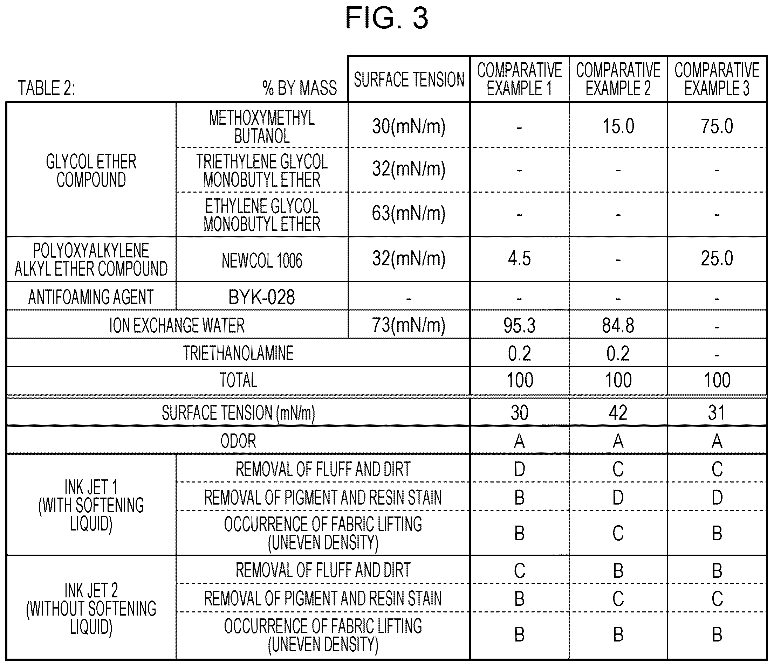

FIG. 3 is a table (Table 2) illustrating a composition and evaluation results of a cleaning liquid in a set of a comparative example.

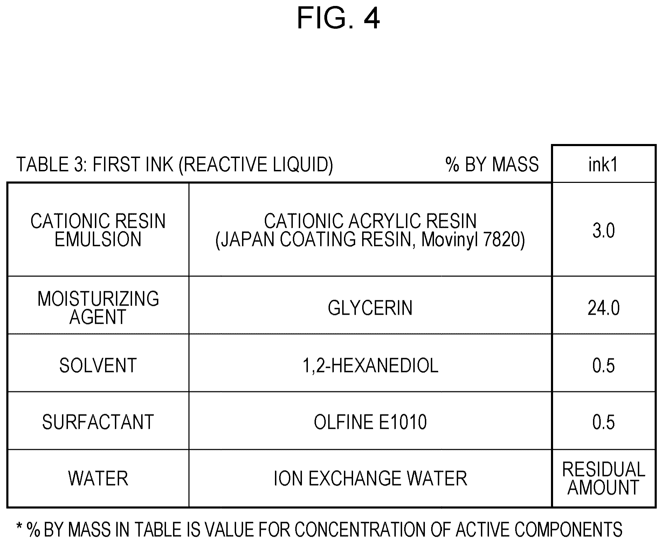

FIG. 4 is a table (Table 3) illustrating a composition of a first ink according to the example and the comparative example.

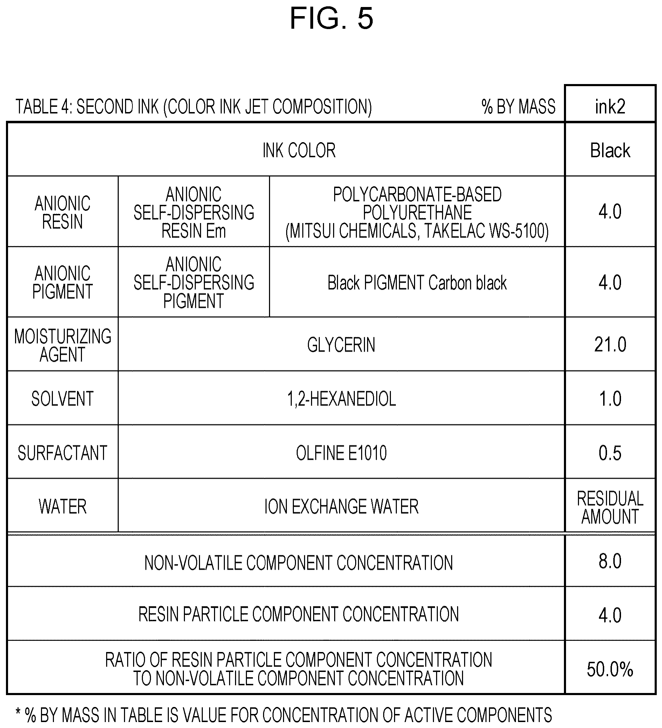

FIG. 5 is a table (Table 4) illustrating a composition of a second ink according to the example and the comparative example.

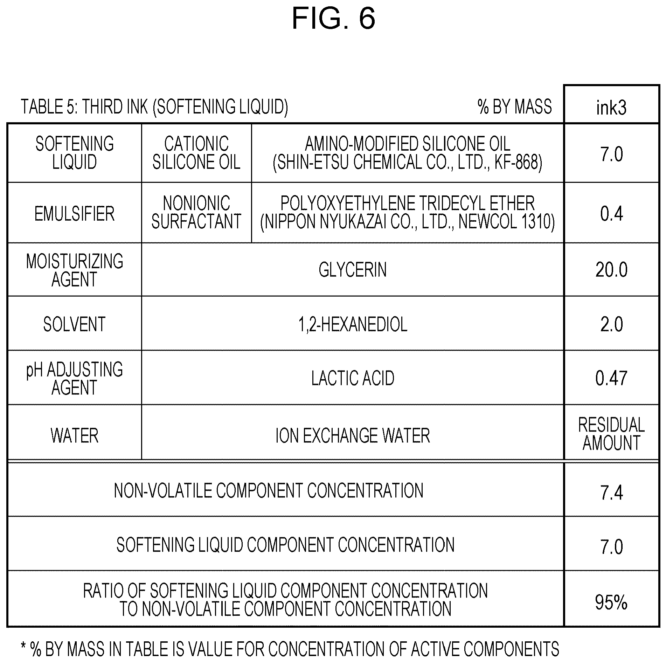

FIG. 6 is a table (Table 5) illustrating a composition of a third ink according to the example and the comparative example.

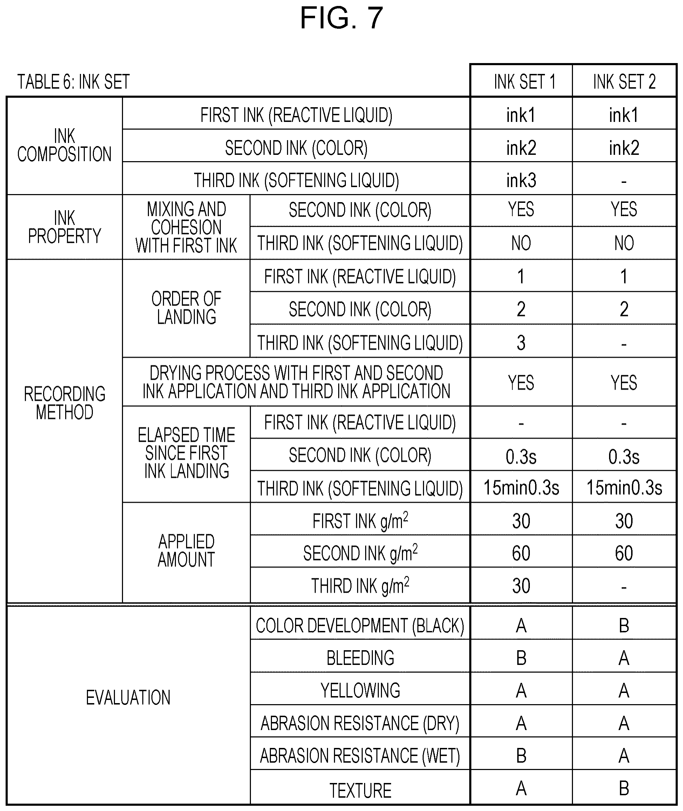

FIG. 7 is a table (Table 6) illustrating ink set combinations, printing conditions and evaluation results according to the example and the comparative example.

### DESCRIPTION OF EMBODIMENTS

Hereinafter, embodiments of the present disclosure will be described. The embodiments described below describe examples of the present disclosure. The present disclosure is not limited to the following embodiments, and includes various modifications implemented within a range not changing the gist of the present disclosure. It should be noted that not all of the configurations described below are essential configurations of the present disclosure.

### 1. Set

A set according to the present embodiment is a set of an ink jet composition and a cleaning liquid for use in an ink jet textile printing recording apparatus. Hereinafter, a cleaning liquid, an ink jet composition, and a recording apparatus will be described in detail in this order. The "set" (hereinafter also referred to as "composition set") according to the present embodiment includes an ink jet composition and a cleaning liquid, which are respectively used for recording with an ink jet recording apparatus and for maintenance (cleaning) of the ink jet recording apparatus. This set is not limited to cases of being manufactured, sold, or the like in an integrated state. For example, even when an ink jet composition and a cleaning liquid are manufactured and sold independently, these components are included in a set when the components are intended to be in combination, or when the components are substantially intended to be used in combination.

### 1.1. Cleaning Liquid

A cleaning liquid according to the present embodiment contains a glycol ether compound, a polyoxyalkylene alkyl ether compound, and water. The cleaning liquid has a surface tension of 40 mN/m or less at 25°C and is used for cleaning the fabric transport member of an ink jet textile printing recording apparatus.

### 1.1.1. Glycol ether Compound

The cleaning liquid contains a glycol ether compound. The cleaning liquid, by containing a glycol ether compound, can swell and/or dissolve the solid components and oily components contained in the ink jet composition layer, in which the ink jet composition adheres to and dried on the fabric transport member, thus making it easier for these components to detach from the fabric transport member.

The glycol ether compound is not particularly limited, but examples thereof include ethylene glycol monomethyl ether, ethylene glycol monoethyl ether, ethylene glycol monopropyl ether, ethylene glycol monobutyl ether, ethylene glycol monomethyl ether acetate, diethylene glycol monomethyl ether, diethylene glycol monoethyl ether, diethylene glycol monopropyl ether, diethylene glycol monobutyl ether, diethylene glycol mono-t-butyl ether, triethylene glycol monobutyl ether, 1-methyl-1-methoxybutanol, propylene glycol monomethyl ether, propylene glycol monoethyl ether, propylene glycol monopropyl ether, propylene glycol monobutyl ether, dipropylene glycol monomethyl ether, dipropylene glycol monoethyl ether, dipropylene glycol monopropyl ether, propylene glycol monobutyl ether, dipropylene glycol monobutyl ether, 3-methoxy-3-methyl-1-butanol, ethylene glycol dimethyl ether, ethylene glycol diethyl ether, ethylene glycol dibutyl ether, diethylene glycol dimethyl ether, and diethylene glycol diethyl ether.

The glycol ether compound contained in the cleaning liquid is preferably selected from those exemplified above, specifically a compound having a surface tension of 40 mN/m or less at 25°C. In this way, the surface tension of the cleaning liquid at 25°C can be easily adjusted to 40 mN/m or less. In addition, the surface tension of the glycol ether compound contained in the cleaning liquid at 25°C is more preferably 38 mN/m or less, even more preferably 35 mN/m or less, and particularly preferably 33 mN/m or less. The lower limit of the surface tension of the glycol ether compound contained in the cleaning liquid at 25°C is not particularly limited, but is preferably 10 mN/m or more, and more preferably 15 mN/m or more.

The surface tension measurement can be performed by using an automatic surface tension meter CBVP-Z (manufactured by Kyowa Interface Science Co., Ltd.) to measure the surface tension when wetting a platinum plate with the glycol ether compound under 25°C environmental conditions.

Further, as the glycol ether compound contained in the cleaning liquid, when selecting a glycol ether compound having a surface tension of 40 mN/m or less at 25°C, it is more preferable to select one or more from triethylene glycol monobutyl ether and 3-methoxy-3-methylbutanol. As a result, the glycol ether compound penetrates between the fabric transport member and the adhered ink jet composition layer, causing the solid components of the ink jet composition layer to swell, thus making it easier for the solid components to detach. In addition, when using 3-methoxy-3-methylbutanol, the odor of the cleaning liquid can be further reduced.

The total content of the glycol ether compound contained in the cleaning liquid is preferably 1% by mass or more and 50% by mass or less, more preferably 2% by mass or more and 40% by mass or less, further preferably 3% by mass or more and 35% by mass or less, still further preferably 6% by mass or more and 30% by mass or less, and especially preferably 10% by mass or more and 20% by mass or less, relative to the total amount of the cleaning liquid. 1.1.2. Polyoxyalkylene alkyl ether Compound

The cleaning liquid according to the present embodiment contains a polyoxyalkylene alkyl ether compound. By containing a polyoxyalkylene alkyl ether compound, the cleaning liquid can prevent the solid components contained in the ink jet composition layer, which are detached from the fabric transport member by the glycol ether compound, from re-adhering to the fabric transport member.

The polyoxyalkylene alkyl ether compound is not particularly limited and examples thereof include a compound represented by the following formula (P). By using such a polyoxyalkylene alkyl ether compound, there is a tendency to more effectively reduce the re-adhesion of solid components and oily components to the fabric transport member, as well as to improve the storage stability of the cleaning liquid.

R⁶O(C₂H₄O)_{w}(C₃H₆O)ₓ(C₂H₄O)_{y}(C₃H₆O)_{z}H ... (P)

In the above formula (P), R⁶ represents an alkyl group having 1 to 20 carbon atoms, preferably an alkyl group having 5 to 15 carbon atoms, and more preferably an alkyl group having 10 to 15 carbon atoms. Also, w is a value from 1 to 20, and x, y, and z are independent values of 0 or 1 to 20. Further, w, x, y, and z satisfy 5 ≤ w + x + y + z ≤ 30, and preferably satisfy 5 ≤ w + x + y + z ≤ 25.

The polyoxyalkylene alkyl ether compound is not particularly limited, and specific examples thereof include C₁₂H₂₅O(C₂H₄O)₆(C₃H₆O)₂(C₂H₄O)₆(C₃H₆O)₈H, C₁₃H₂₇O(C₂H₄O)₆(C₃H₆O)₂(C₂H₄O)₆(C₃H₆O)₈H, C₁₂H₂₅O(C₂H₄O)_{w}(C₃H₆O)ₓ(C₂H₄O)_{y}(C₃H₆O)_{z}H (here, w + y = 15, x + z = 4), C₁₃H₂₇O(C₂H₄O)_{w}(C₃H₆O)ₓ(C₂H₄O)_{y}(C₃H₆O)_{z}H (here, w + y = 15, x + z = 4), C₁₂H₂₅O(C₂H₄O)₈(C₃H₆O)₂(C₂H₄O)₆H, C₁₃H₂₇O(C₂H₄O)₈(C₃H₆O)₂(C₂H₄O)₆H, C₁₂H₂₅O(C₂H₄O)₁₂(C₃H₆O)₂(C₂H₄O)₁₂H, C₁₃H₂₇O(C₂H₄O)₁₂(C₃H₆O)₂(C₂H₄O)₁₂H, CH₃(CH₂)₉(CH₃)CHO(C₂H₄O)₇(C₃H₆O)_{4.5}H, CH₃(CH₂)₁₁(CH₃)CHO(C₂H₄O)₇(C₃H₆O)_{4.5}H, CH₃(CH₂)₉(CH₃)CHO(C₂H₄O)₅(C₃H₆O)_{3.5}H, CH₃(CH₂)₁₁(CH₃)CHO(C₂H₄O)₅(C₃H₆O)_{3.5}H, C₁₄H₂₉O(C₂H₄O)₁₄(C₃H₆O)₂H, C₁₁H₂₃O(C₂H₄O)₈H, C₁₀H₂₁O(C₂H₄O)₁₁H, and C₁₂H₂₅O(C₂H₄O)₁₅H. Among these polyoxyalkylene alkyl ether compounds, polyethylene glycol mono-2-ethylhexyl ether is more preferable.

The commercially available polyoxyalkylene alkyl ether compound is not particularly limited, and specific examples thereof include Neugen DL-0415, Neugen ET-116B, Neugen ET-106A, Neugen DH-0300, Neugen YX-400, Neugen EA-160 (all manufactured by DKS Co., Ltd.), Emulgen 1108 (trade name by Kao Corporation), Newcol 1006 (manufactured by Nippon Nyukazai Co., Ltd.).

The polyoxyalkylene alkyl ether compound may be used alone or in combination of two or more.

The total content of the polyoxyalkylene alkyl ether compound in the cleaning liquid is preferably 0.5% by mass or more and 50% by mass or less, more preferably 1% by mass or more and 30% by mass or less, further preferably 1.5% by mass or more and 10% by mass or less, still further preferably 3% by mass or more and 20% by mass or less, and especially preferably 4% by mass or more and 10% by mass or less, relative to the total amount of the cleaning liquid.

Further, the total content of the polyoxyalkylene alkyl ether compound is preferably 5% by mass or more, more preferably 10% by mass or more, and further preferably 15% by mass or more, based on the total amount of components in the cleaning liquid excluding water. With such a content, the cleaning effect can be further optimized. Further, the total content of the polyoxyalkylene alkyl ether compound is preferably 90% by mass or less, more preferably 80% by mass or less, and further preferably 74% by mass or less, based on the total amount of components in the cleaning liquid excluding water.

In addition, the content of the polyoxyalkylene alkyl ether compound relative to the content of the aforementioned glycol ether compound is preferably 0.1 to 5 by mass ratio, more preferably 0.1 to 3, and even more preferably 0.3 to 3. By having a relatively high content of the polyoxyalkylene alkyl ether compound, the cleaning effect can be further optimized.

### 1.1.3. Water

The cleaning liquid contains water. Examples of water include pure water such as ion exchange water, ultrafiltered water, reverse osmosis water, and distilled water, and water such as ultrapure water, from which ionic impurities are removed as much as possible. In addition, when water sterilized by irradiation with ultraviolet rays, addition of hydrogen peroxide, or the like is used, the generation of bacteria or fungi when the composition is stored for a long period of time can be reduced.

The water content is 30% by mass or more, preferably 40% by mass or more, more preferably 45% by mass or more, and further preferably 50% by mass or more, based on the total amount of the cleaning liquid. The term "water in the softening liquid" includes, for example, water contained in the organopolysiloxane dispersion used as a raw material and water to be added. By having a water content of 30% by mass or more, the cleaning liquid can be made to have a relatively low viscosity. Further, the upper limit of the water content is preferably 90% by mass or less, more preferably 85% by mass or less, and further preferably 80% by mass or less, based on the total amount of the cleaning liquid. In the present specification, the term "aqueous composition" refers to a composition containing 30% by mass or more of water with respect to the total mass (100% by mass) of the composition.

### 1.1.4. Other Components

### (1) Antifoaming Agent

The cleaning liquid according to the present embodiment may further contain an antifoaming agent. When the cleaning liquid contains an antifoaming agent, foaming of the cleaning liquid can be further suppressed.

The antifoaming agent is not particularly limited and examples thereof include a silicone-based antifoaming agent, a polyether-based antifoaming agent, a fatty acid ester-based antifoaming agent, and an acetylene glycol-based antifoaming agent. Examples of a commercially available antifoaming agent include BYK-011, BYK-012, BYK-017, BYK-018, BYK-019, BYK-020, BYK-021, BYK-022, BYK-023, BYK-024, BYK-025, BYK-028, BYK-038, BYK-044, BYK-080A, BYK-094, BYK-1610, BYK-1615, BYK-1650, BYK-1730, BYK-1770 (manufactured by BYK Japan KK.), Surfynol DF37, DF110D, DF58, DF75, DF220, MD-20, and Envirogem AD01 (manufactured by Evonik Industries). The antifoaming agent may be used alone or in combination of two or more.

When the cleaning liquid contains an antifoaming agent, the content of the antifoaming agent is not particularly limited, but may be, for example, 0.01% by mass or more and 1.0% by mass or less based on the total amount of the cleaning liquid, preferably, 0.05% by mass or more and 0.5% by mass or less, and more preferably 0.1% by mass or more and 0.2% by mass or less.

### (2) pH-Adjusting Agent

The cleaning liquid according to the present embodiment may further contain a pH-adjusting agent. The pH-adjusting agent is not particularly limited and examples thereof include an appropriate combination of an acid, a base, a weak acid, and a weak base. Examples of acids and bases used in such combinations include, as inorganic acids, sulfuric acid, hydrochloric acid, nitric acid, and the like as inorganic bases, lithium hydroxide, sodium hydroxide, potassium hydroxide, potassium dihydrogen phosphate, disodium hydrogen phosphate, potassium carbonate, sodium carbonate, sodium bicarbonate, ammonia and the like as organic bases, triethanolamine, tripropanolamine, diethanolamine, monoethanolamine, triisopropanolamine, diisopropanolamine, tris(hydroxymethyl)aminomethane (THAM), and as organic acids, adipic acid, citric acid, succinic acid, lactic acid, and Good's buffers such as N,N-bis(2-hydroxyethyl)-2-aminoethanesulfonic acid (BES), 4-(2-hydroxyethyl)-1-piperazineethanesulfonic acid (HEPES), morpholinoethanesulfonic acid (MES), morpholinopropanesulfonic acid (MOPS), N-(carbamoylmethyl)iminodiacetic acid (ADA), piperazine-1,4-bis(2-ethanesulfonic acid) (PIPES), N-(2-acetamido)-2-aminoethanesulfonic acid (ACES), cholamine hydrochloride, N-tris(hydroxymethyl)methyl-2-aminoethanesulfonic acid (TES), acetamidoglycine, tricine, glycinamide, bicine, as well as phosphate buffer, citrate buffer, Tris buffer, and the like.

### (3) Other Components

The cleaning liquid according to the present embodiment may contain other components as long as the function is not impaired. Examples of other components include a moisturizing agent, a solvent, a surfactant, a viscosity modifier, an antifungal agent, an antioxidant, an oxygen absorber, a dissolution aid, and the like.

### 1.1.5. Surface Tension

The cleaning liquid according to the present embodiment has a surface tension of 40 mN/m or less at 25°C. The surface tension of the cleaning liquid at 25°C is more preferably 38 mN/m or less, even more preferably 35 mN/m or less, and particularly preferably 33 mN/m or less. The lower limit of the surface tension of the cleaning liquid at 25°C is not particularly limited, but is preferably 10 mN/m or more, and more preferably 15 mN/m or more.

The surface tension of the cleaning liquid can be adjusted by selecting and/or blending the type and amount of glycol ether compound and polyoxyalkylene alkyl ether compound, the water content, and the selection and addition amount of other components.

The surface tension can be measured by confirming the surface tension when a platinum plate is wetted with the cleaning liquid under a 25°C environment using an automatic surface tensiometer CBVP-Z (manufactured by Kyowa Interface Science Co., Ltd.).

### 1.1.6 Use of Cleaning Liquid

The cleaning liquid according to the present embodiment is used for cleaning the fabric transport member of an ink jet textile printing recording apparatus. Although the ink jet textile printing recording apparatus and the fabric transport member will be described later, the cleaning liquid is used for removing solid components and/or oily components formed by drying the ink jet composition adhered to the surface of the fabric transport member. More preferably, the cleaning liquid is used for removing solid components and/or oily components formed by drying the ink jet composition adhered to the surface of the glue layer formed at the fabric transport member.

### 1.2. Ink Jet Composition

The set according to the present embodiment includes an ink jet composition. The ink jet composition contains resin particles and water.

### 1.2.1. Resin Particles

The ink jet composition contains resin particles. The resin particles can improve the adhesion of images formed by the composition adhered to the fabric. Examples of the resin particles include anionic resin particles made of urethane resin, acrylic resin (including styrene-acrylic resin), fluorene resin, polyolefin resin, rosin-modified resin, terpene resin, polyester resin, polyamide resin, epoxy resin, vinyl chloride resin, vinyl chloride-vinyl acetate copolymer, ethylene vinyl acetate resin, silicone-acrylic resin, and the like.

In addition, the ink jet composition may contain particles containing an organopolysiloxane as the resin particles. The particles containing organopolysiloxane are not particularly limited as long as the particles contain organopolysiloxane, and may be, for example, particles of organopolysiloxane itself or particles in a state in which the organopolysiloxane is dispersed with an emulsifier or the like. The property of the organopolysiloxane in the particles may be a solid or a liquid. For example, when an oily organopolysiloxane is dispersed in water in the form of particles by an emulsifier, the dispersed particles correspond to particles containing organopolysiloxane.

The resin particles can be used individually or in combination of two or more types.

A urethane-based resin is a general term for a resin having a urethane bond. For the urethane-based resin, a polyether-type urethane resin including an ether bond in the main chain, a polyester-type urethane resin including an ester bond in the main chain, and a polycarbonate-type urethane resin including a carbonate bond in the main chain, in addition to a urethane bond, and the like may be used. In addition, as the urethane-based resin, a commercially available product may be used. For example, commercially available products such as SUPERFLEX 460, 460s, 840, and E-4000 (trade names, manufactured by DKS Co., Ltd.), RESAMINE D-1060, D-2020, D-4080, D-4200, D-6300, and D-6455 (trade names, manufactured by Dainichiseika Color & Chemicals Mfg. Co., Ltd.), Takelac WS-6021, and W-512-A-6 (trade names, manufactured by Mitsui Chemicals & SKC Polyurethanes Inc.), Sancure 2710 (trade name, manufactured by Lubrizol Corporation), PERMARIN UA-150 (trade name, manufactured by Sanyo Chemical Industries Ltd.), ETERNACOLL UW series, for example, UW-1527 or the like, (manufactured by UBE Corporation), or the like may be used.

An acrylic resin is a general term for polymers obtained by polymerizing at least an acrylic monomer such as (meth)acrylic acid and (meth)acrylic acid ester as one component, and examples thereof include a resin obtained from an acrylic monomer, a copolymer of an acrylic monomer and a monomer other than acrylic monomer, and the like. Examples thereof include an acrylic-vinyl-based resin which is a copolymer of an acrylic monomer and a vinyl-based monomer and the like. In addition, examples of the vinyl-based monomer include styrene and the like.

As the acrylic monomer, acrylamide, acrylonitrile, and the like can also be used. For the resin emulsion using acrylic resin as a raw material, a commercially available product may be used. For example, any resin emulsion may be selected and used from FK-854 (trade name, manufactured by CHIRIKA Co., Ltd.), Mowinyl 952B, 718A, and 6760 (trade names, manufactured by Japan Coating Resin Corporation), Nipol LX852 and LX874 (trade names, manufactured by Zeon Corporation), or the like.

Incidentally, in the present specification, the acrylic resin may be a styrene-acrylic resin described below. In addition, in the present specification, the notation of "(meth)acrylic" means at least one of acrylic and methacrylic.

The styrene-acrylic resin is a copolymer obtained from a styrene monomer and a (meth)acrylic monomer, and examples thereof include styrene-acrylic acid copolymers, styrene-methacrylic acid copolymers, styrene-methacrylic acid-acrylate copolymers, styrene-α-methylstyrene-acrylic acid copolymers, and styrene-α-methylstyrene-acrylic acid-acrylate copolymers. As the styrene-acrylic resin, a commercially available product may be used. For example, Joncryl 62J, 7100, 390, 711, 511, 7001, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (trade names, manufactured by BASF SE), Mowinyl 966A and 975N (trade names, manufactured by Japan Coating Resin Corporation), VINYBLAN 2586 (manufactured by Nissin Chemical Industry Co., Ltd.), or the like may be used.

As a silicone-acrylic copolymer resin, a commercially available product can be used. Examples thereof include CHALINE series FE-230N, FE-502, E-370, RU-911, R-170, R170S, LC-190, and R-170BX, manufactured by Nissin Chemical Industry Co., Ltd., SYMAC US-380, SYMAC US-450, and SYMAC US-480, manufactured by Toagosei Co., Ltd., IE-7170, SE 1980 CLEAR, BY22-826EX, and propyleneoxy-LON-MF-40, manufactured by Dow Corning Toray Silicone Co., Ltd., LEXAN EXL manufactured by SABIC Innovative Plastics Japan LLC., TARFLON NEO manufactured by Idemitsu Kosan Co., Ltd., Banstar S-806 manufactured by Saiden Chemical Industry Co., Ltd., Mowinyl manufactured by Japan Coating Resin Corporation, COATAX manufactured by Toray Fine Chemicals Co., Ltd., DAITOSOL 5000SJ manufactured by Daito Kasei Kogyo Co., Ltd., YODOSOL GH41 manufactured by N.S.C. Japan, an acrylates/ethylhexyl acrylate/dimethicone methacrylate copolymer (trade name: KP578) manufactured by Shin-Etsu Chemical Co., Ltd., BONCOAT and CERANATE manufactured by DIC Corporation, and acrylic silicone-based emulsions "SIFCLEAR S101" and "SIFCLEAR S102" manufactured by JSR Corporation.

The polyolefin-based resin has an olefin such as ethylene, propylene, and butylene in the structural skeleton, and known ones can be appropriately selected and used. As the olefin resin, a commercially available product can be used. For example, ARROWBASE CB-1200 and CD-1200 (trade names, manufactured by Unitika Ltd.), or the like may be used.

In addition, the resin particles may be supplied in the form of an emulsion, and as examples of commercially available products of such a resin emulsion, any resin emulsion may be selected and used from Microgel E-1002 and E-5002 (trade names, manufactured by Nippon Paint Co. Ltd., styrene-acrylic resin emulsion), VONCOAT 4001 (trade name, manufactured by DIC Corporation, acrylic resin emulsion), VONCOAT 5454 (trade name, manufactured by DIC Corporation, styrene-acrylic resin emulsion), Polysol AM-710, AM-920, AM-2300, AP-4735, AT-860, and PSASE-4210E (acrylic resin emulsion), Polysol AP-7020 (styrene-acrylic resin emulsion), Polysol SH-502 (vinyl acetate resin emulsion), Polysol AD-13, AD-2, AD-10, AD-96, AD-17, and AD-70 (ethylene vinyl acetate resin emulsion), Polysol PSASE-6010 (ethylene vinyl acetate resin emulsion) (trade names, manufactured by Showa Denko KK), Polysol SAE1014 (trade name, styrene-acrylic resin emulsion, manufactured by Zeon Corporation), Saivinol SK-200 (trade name, acrylic resin emulsion, manufactured by Saiden Chemical Industry Co., Ltd.), AE-120A (trade name, manufactured by JSR Corporation, acrylic resin emulsion), AE373D (trade name, manufactured by Emulsion Technology Co., Ltd., carboxy-modified styrene-acrylic resin emulsion), Seikadyne 1900W (trade name, manufactured by Dainichiseika Color & Chemicals Mfg. Co., Ltd., ethylene vinyl acetate resin emulsion), VINYBLAN 2682 (acrylic resin emulsion), VINYBLAN 2886 (vinyl acetate acrylic resin emulsion), VINYBLAN 5202 (acetic acid acrylic resin emulsion) (trade names, manufactured by Nisshin Chemical Industry Co., Ltd.), Elitel KA-50715, KT-8803, KT-9204, KT-8701, KT-8904, and KT-0507 (trade names, manufactured by Unitika Ltd., polyester resin emulsion), Hi-Tech SN-2002 (trade name, manufactured by TOHO CHEMICAL INDUSTRY Co., Ltd., polyester resin emulsion), TAKELAK W-6020, W-635, W-6061, W-605, W-635, W-6021, and WS-5100 (trade names, manufactured by Mitsui Chemicals & SKC Polyurethanes Inc., urethane-based resin emulsion), SUPERFLEX 870, 800, 150, 420, 460, 470, 610, and 700 (trade names, manufactured by DKS Co., Ltd., urethane-based resin emulsion), PERMARIN UA-150 (manufactured by Sanyo Chemical Industries, Ltd., urethane-based resin emulsion), Sancure 2710 (manufactured by Japanese Lubrizol Corporation, urethane-based resin emulsion), NeoRez R-9660, R-9637, and R-940 (manufactured by Kusumoto Chemicals, Ltd., urethane-based resin emulsion), ADEKA BONTIGHTER HUX-380 and 290K (manufactured by ADEKA Corporation, urethane-based resin emulsion), Mowinyl 966A and Mowinyl 7320 (manufactured by Japan Coating Resin Corporation), Joncryl 7100, 390, 711, 511, 7001, 632, 741, 450, 840, 74J, HRC-1645J, 734, 852, 7600, 775, 537J, 1535, PDX-7630A, 352J, 352D, PDX-7145, 538J, 7640, 7641, 631, 790, 780, and 7610 (manufactured by BASF SE), NK binder R-5HN (manufactured by Shin-Nakamura Chemical Co., Ltd.), HYDRAN WLS-210 (non-crosslinkable polyurethane: manufactured by DIC Corporation), and Joncryl 7610 (manufactured by BASF SE).

In addition, particles (emulsions) of cationic resins (cationic polymers) may be used as the resin particles. Examples of such resin particles include particles of cationic urethane-based resins, cationic olefin-based resins, and cationic amine-based resins.

As cationic urethane-based resins, commercially available products can be used. For example, Hydran CP-7010, CP-7020, CP-7030, CP-7040, CP-7050, CP-7060, CP-7610 (trade names, manufactured by Dainippon Ink and Chemicals, Inc.), Superflex 600, 610, 620, 630, 640, 650 (trade names, manufactured by DKS Co., Ltd.), Urethane Emulsion WBR-2120C, WBR-2122C (trade names, manufactured by Taisei Fine Chemical Co., Ltd.), Movinyl 7820 (trade name: manufactured by Japan Coating Resin Co., Ltd.), or the like can be used.

The cationic olefin resin is a resin having an olefin such as ethylene and propylene in the structural skeleton, and known ones can be appropriately selected and used. In addition, the cationic olefin resin may be in an emulsion state of being dispersed in a solvent containing water, an organic solvent, or the like. As the cationic olefin resin, a commercially available product can be used, and examples thereof include arrow base CB-1200 and CD-1200 (trade name, manufactured by Unitika Ltd.).

As the cationic amine-based resin (cationic polymer), any resin having an amino group in the structure may be used, and known ones can be appropriately selected and used. Examples thereof include polyamine resin, polyamide resin, polyallylamine resin, and the like. Polyamine resin is a resin having an amino group in the main skeleton of the resin. Polyamide resin is a resin having an amide group in the main skeleton of the resin. Polyallylamine resin is a resin having a structure derived from an allyl group in the main skeleton of the resin.

In addition, as the cationic polyamine-based resin, Unisense KHE103L (hexamethylenediamine/epichlorohydrin resin, 1% aqueous solution of a pH of substantially 5.0, viscosity: 20 to 50 (mPa·s), an aqueous solution with a solid component concentration of 50% by mass) manufactured by Senka Co., Ltd., Unisense KHE104L (dimethylamine/epichlorohydrin resin, 1% aqueous solution of a pH of substantially 7.0, viscosity: 1 to 10 (mPa·s), an aqueous solution with a solid component concentration of 20% by mass), and the like can be used. In addition, specific examples of commercially available products of the cationic polyamine-based resin include FL-14 (manufactured by SNF Co. Ltd.), ARAFIX 100, 251S, 255, and 255LOX (manufactured by Arakawa Chemical Industries, Ltd.), DK-6810, 6853, and 6885, and WS-4010, 4011, 4020, 4024, 4027, and 4030 (manufactured by Seiko PMC Corporation), Papiogen P-105 (manufactured by Senka), Sumirez Resin 650 (30), 675A, 6615, and SLX-1 (manufactured by Taoka Chemical Co., Ltd.), Catiomaster (registered trademark) PD-1, 7, 30, A, PDT-2, PE-10, PE-30, DT-EH, EPA-SK01, and TMHMDA-E (manufactured by Yokkaichi Chemical Company, Limited), and Jetfix 36N, 38A, 5052 (manufactured by Satoda Kako Co., Ltd.).

Examples of the polyamine-based resin include a polyallylamine resin. Examples of the polyallylamine resin include polyallylamine hydrochloride, polyallylamineamide sulfate, allylamine hydrochloride/diallylamine hydrochloride copolymers, allylamine acetate/diallylamine acetate copolymers, allylamine acetate/diallylamine acetate copolymers, allylamine hydrochloride/dimethylallylamine hydrochloride copolymers, allylamine/dimethylallylamine copolymers, polydiallylamine hydrochloride, polymethyldiallylamine hydrochloride, polymethyldiallylamineamide sulfate, polymethyldiallylamine acetate, polydiallyldimethylammonium chloride, diallylamine acetate/sulfur dioxide copolymers, diallylmethylethylammonium ethylsulfate/sulfur dioxide copolymers, methyldiallylamine hydrochloride/sulfur dioxide copolymers, diallyldimethylammonium chloride/sulfur dioxide copolymers, and diallyldimethylammonium chloride/acrylamide copolymers.

Organopolysiloxane is a generic term for organic silicon compounds having a siloxane bond "-Si(R¹R²)-O-" as a skeleton, in which a methyl group, a phenyl group, a vinyl group, an amino group, or the like is bonded to the siloxane bond as organic groups R¹ and R². Due to the chemical composition and the molecular weight, the organopolysiloxane exhibits oil-like (oily), rubber-like, or resin-like properties, and is referred to as silicone oil, silicone rubber, or silicone resin, respectively.

When an organopolysiloxane is used as resin particles in the ink jet composition of the present embodiment, it is more preferable that the organopolysiloxane is an oily compound. When the organopolysiloxane is an oily compound, the organopolysiloxane is easily and stably dispersed in the form of particles in an aqueous matrix by an emulsification treatment described below.

The molecular structure of the organopolysiloxane is not particularly limited, and examples thereof include linear, branched, cyclic, grid-like, cage-like structures, and other structures. When the molecular structure of the organopolysiloxane is an acyclic structure, one or two or more groups selected from a hydrocarbon group, an alkoxy group, a hydroxyl group, a hydrogen atom, and a halogen, which may have a substituent, are usually bonded to the terminal Si atom of this molecule.

The organopolysiloxane is not particularly limited, and examples thereof include dimethyl silicone, alkyl-modified silicone, amino-modified silicone, epoxy-modified silicone, cyclic silicone, methyl phenyl silicone, and other silicones. These may be used alone or as a mixture of two or more types thereof.

In addition, as the organopolysiloxane, those commercially available as silicone oils may be used. Examples thereof include dimethyl silicone oil, methyl phenyl silicone oil, methyl hydrogen silicone oil, polyether-modified silicone oil, aralkyl-modified silicone oil, fluoroalkyl-modified silicone oil, long-chain alkyl-modified silicone oil, higher fatty acid ester-modified silicone oil, higher fatty acid amide-modified silicone oil, polyether/long-chain alkyl/aralkyl-modified silicone oil, long-chain alkyl/aralkyl-modified silicone oil, phenyl-modified silicone oil, and polyether/methoxy-modified silicone oil.

In addition, among the above-exemplified organopolysiloxanes, it is more preferable that the organopolysiloxane is a nonionic silicone. In addition, among the above-exemplified organopolysiloxanes, it is more preferable that the organopolysiloxane is an unmodified silicone. Such organopolysiloxanes are chemically more stable and are less likely to cause yellowing or the like of an image to be formed.

Further, the organopolysiloxane is more preferably one or more selected from dimethyl silicone, methyl phenyl silicone, and methyl hydrogen silicone.

Examples of commercially available products of silicone oils include dimethyl silicone (KF-96 series, manufactured by Shin-Etsu Chemical Co., Ltd.), methyl hydrogen type polysiloxane (KF-99 series, KF-9901, and the like, manufactured by Shin-Etsu Chemical Co., Ltd.), methyl phenyl silicone (KF-50 series and the like, manufactured by Shin-Etsu Chemical Co., Ltd.), amino-modified silicone (KF-868, and the like, manufactured by Shin-Etsu Chemical Co., Ltd.), and silicone-branched silicone treatment agents (KF-9908, KF-9909, and the like, manufactured by Shin-Etsu Chemical Co., Ltd.).

For example, the viscosity of the silicone at 25°C is not particularly limited, but is preferably 1000 mPa·s or less, more preferably 50 mPa·s or more, even more preferably 500 mPa·s or more and 900 mPa·s or less, and still even more preferably 600 mPa·s or more and 700 mPa·s or less. In addition, the base oil viscosity when the silicone is emulsified and dispersed is not particularly limited, but is preferably 1,000,000 mm²/s or less, and more preferably 100,000 mm²/s or less, and the lower limit is preferably 10 mm²/s or more, and more preferably 100 mm²/s or more. The base oil viscosity indicates the viscosity of the base oil and is a numerical value obtained by measuring the magnitude of the internal resistance of the base oil. The higher the numerical value of the base oil viscosity, the higher the viscosity, and the smaller the numerical value of the base oil, the lower the viscosity.

The organopolysiloxane may be blended in the form of particles by emulsifying various surfactants as emulsifiers. As the emulsifiers at that time, for example, nonionic surfactants, negative ion (anionic) surfactants, positive ion (cationic) surfactants, amphoteric surfactants, phospholipid, or the like can be used.

Examples of the nonionic surfactants include glycerin fatty acid esters, polyglycerin fatty acid esters, propylene glycol fatty acid esters, sorbitan fatty acid esters, fatty acid esters of sorbitol and alkylene glycol adducts thereof, polyalkylene glycol fatty acid esters, sucrose fatty acid esters, polysorbate 20, polysorbate 60, polysorbate 80, polyoxyalkylene alkyl ethers, and polyoxyethylene alkylphenyl ethers.

In addition, as the nonionic surfactant, for example, nonionic surfactants such as polyoxyethylene glycerin fatty acid ester, polyglycerin fatty acid esters, sorbitan fatty acid ester, polyoxyethylene sorbitan fatty acid ester, polyoxyethylene sorbit fatty acid ester, polyethylene glycol fatty acid ester, polyoxyethylene castor oil, polyoxyethylene hardened castor oil, polyoxyethylene phytosterol, polyoxyethylene polyoxypropylene alkyl ether, polyoxyethylene lanolin, polyoxyethylene lanolin alcohol, polyoxyethylene beeswax derivatives, polyoxyethylene alkylamine, polyoxyethylene fatty acid amide, polyoxyethylene alkylphenyl formaldehyde condensates, polyoxyethylene alkyl ether phosphoric acid (salt), and the like are suitably used.

Examples of the anionic surfactants include alkyl sulfate ester salt, polyoxyethylene alkyl sulfate ester salt, alkyl benzene sulfonate, and α-olefin sulfonate. Examples of the cationic surfactant include alkyltrimethylammonium chloride, dialkyldimethylammonium chloride, and benzalkonium chloride. Examples of the amphoteric surfactant include alkyl dimethyl aminoacetic acid betaine, and alkyl amido dimethyl aminoacetic acid betaine. Further, naturally derived surfactants may be used, and examples thereof include lecithin, lanolin, cholesterol, and saponin.

The blending amount of the emulsifier when emulsifying the organopolysiloxane is preferably less than 20% by mass, more preferably 15% by mass or less, and particularly preferably 10% by mass or less, of the total amount of the emulsion composition.

In addition, it is desirable that the average particle diameter of the particles of the emulsified particulate organopolysiloxane is 2 µm or less, preferably 1 µm or less, and more preferably within a range of 0.05 to 0.5 µm.

The total content of the resin particles in the ink jet composition is preferably 1% by mass or more and 15% by mass or less, more preferably 2% by mass or more and 10% by mass or less, and even more preferably 2.5% by mass or more and 8% by mass or less, based on the total amount of the ink jet composition. By keeping the content of resin particles within the above range, there is a tendency to improve the color development, fixability, and abrasion resistance of the ink jet composition adhered to the recording medium.

In addition, when the ink jet composition contains organopolysiloxane as resin particles, the ink jet composition can function as a softening liquid. That is, when the ink jet composition contains organopolysiloxane as resin particles, the ink jet composition can serve as a functional liquid that imparts flexibility to recorded matter and images. In this way, it is easier to obtain better texture and color development (higher density) for recorded matter, and although problems with contamination of the fabric transport member are prone to occur, excellent cleaning performance can be achieved with the cleaning liquid.

### 1.2.2. Water

The ink jet composition according to the present embodiment contains water. Since the water content is the same as that described for the aforementioned cleaning liquid, the description thereof will be omitted.

### 1.2.3. Other Components

The ink jet composition according to the present embodiment may contain the following components.

### (1) Colorant

The ink jet composition may contain a pigment as a colorant, and may be a so-called pigment color ink. Examples of the pigment contained in the ink jet composition include color pigments such as cyan, yellow, magenta, and black, and special color pigments such as white and pearl.

The pigment may be a mixture. The pigment is excellent in storage stability such as light resistance, weather resistance, and gas resistance, and is preferably an organic pigment from that viewpoint.

Specifically, as the pigment, azo pigments such as insoluble azo pigments, condensed azo pigments, azo lakes, and chelated azo pigments, polycyclic pigments such as phthalocyanine pigments, perylene and perinone pigments, anthraquinone pigments, quinacridone pigments, dioxane pigments, thioindigo pigments, isoindolinone pigments, and quinophthalone pigments, dye chelates, dye lakes, nitro pigments, nitroso pigments, aniline black, daylight fluorescent pigments, carbon black, and the like can be used. These pigments may be used alone or in combination of two or more thereof. Further, a white pigment, a photoluminescent pigment, or the like may be used as the pigment.

Specific examples of the pigments are not particularly limited and examples thereof include the following.

Examples of black pigments include No. 2300, No. 900, MCF 88, No. 33, No. 40, No. 45, No. 52, MA7, MA8, MA100, and No. 2200 B (all manufactured by Mitsubishi Chemical Corporation), Raven 5750, Raven 5250, Raven 5000, Raven 3500, Raven 1255, and Raven 700 (all manufactured by Carbon Columbia), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (manufactured by CABOT JAPAN K.K.), Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all manufactured by Degussa).

Examples of yellow pigments include C.I. Pigment Yellow 1, 2, 3, 4, 5, 6, 7, 10, 11, 12, 13, 14, 16, 17, 24, 34, 35, 37, 53, 55, 65, 73, 74, 75, 81, 83, 93, 94, 95, 97, 98, 99, 108, 109, 110, 113, 114, 117, 120, 124, 128, 129, 133, 138, 139, 147, 151, 153, 154, 167, 172, and 180.

Examples of magenta pigments include C.I. Pigment Red 1, 2, 3, 4, 5, 6, 7, 8, 9, 10, 11, 12, 14, 15, 16, 17, 18, 19, 21, 22, 23, 30, 31, 32, 37, 38, 40, 41, 42, 48 (Ca), 48 (Mn), 57 (Ca), 57:1, 88, 112, 114, 122, 123, 144, 146, 149, 150, 166, 168, 170, 171, 175, 176, 177, 178, 179, 184, 185, 187, 202, 209, 219, 224, 245, or C.I. Pigment Violet 19, 23, 32, 33, 36, 38, 43, and 50.

Examples of cyan pigments include C.I. Pigment Blue 1, 2, 3, 15, 15: 1, 15: 2, 15: 3, 15: 34, 15: 4, 16, 18, 22, 25, 60, 65, and 66, and C.I. Bat blue 4 and 60.

In addition, pigments other than the magenta, cyan, and yellow pigments are not particularly limited and examples thereof include C.I. Pigment Green 7, 10, C.I. Pigment Brown 3, 5, 25, 26, and C.I. Pigment Orange 1, 2, 5, 7, 13, 14, 15, 16, 24, 34, 36, 38, 40, 43, and 63.

The pearl pigment is not particularly limited and examples thereof include pigments having pearl luster or interference luster such as titanium dioxide coated mica, fish scale foil, and bismuth acid chloride.

The metallic pigment is not particularly limited and examples thereof include particles formed of aluminum, silver, gold, platinum, nickel, chromium, tin, zinc, indium, titanium, copper, and the like, alone or in alloys.

Examples of the white pigment include metal compounds such as metal oxide, barium sulfate, and calcium carbonate. Examples of the metal oxide include titanium dioxide, zinc oxide, silica, alumina, magnesium oxide, and the like. In addition, particles having a hollow structure may be used as the white pigment, and as the particles having a hollow structure, known particles can be used.

Preferably, the pigment can be stably dispersed in a dispersion medium, and for this purpose, a dispersant may be used for the dispersion of the pigment. Examples of the dispersant include resin dispersants or the like, and the dispersant is selected from those that can provide good dispersion stability of the pigment in the ink jet composition. In addition, the pigment may also be used as a self-dispersing pigment by modifying the surface of the pigment particles by oxidizing or sulfonating the pigment surface with, for example, ozone, hypochlorous acid, fuming sulfuric acid, or the like.

Examples of the resin dispersant (dispersant resin) include (meth)acrylic resins such as poly(meth)acrylic acid, (meth)acrylic acid-acrylonitrile copolymers, (meth)acrylic acid-(meth)acrylic acid ester copolymers, vinyl acetate-(meth)acrylic acid ester copolymers, vinyl acetate-(meth)acrylic acid copolymers, and vinyl naphthalene-(meth)acrylic acid copolymers, and salts thereof, styrene-based resins such as styrene-(meth)acrylic acid copolymers, styrene-(meth)acrylic acid-(meth)acrylic acid ester copolymers, styrene-α-methylstyrene-(meth)acrylic acid copolymers, styrene-α-methylstyrene-(meth)acrylic acid-(meth)acrylic acid ester copolymers, styrene-maleic acid copolymers, and styrene-maleic acid anhydride copolymers, and salts thereof, urethane-based resins, which are polymer compounds (resins) having a urethane bond formed when an isocyanate group reacts with a hydroxyl group, and which may be linear and/or branched regardless of a crosslinked structure, and salts thereof, polyvinyl alcohols, vinyl naphthalene-maleic acid copolymers and salts thereof, vinyl acetate-maleic acid ester copolymers and salts thereof, and water-soluble resins such as vinyl acetate-crotonic acid copolymers and salts thereof. Among these, a copolymer of a monomer having a hydrophobic functional group and a monomer having a hydrophilic functional group, and a polymer formed of monomers having both a hydrophobic functional group and a hydrophilic functional group are preferable. As the form of the copolymer, any form of a random copolymer, a block copolymer, an alternating copolymer, and a graft copolymer can be used.

Examples of commercially available products of the styrene-based resin dispersant include X-200, X-1, X-205, X-220, and X-228 (manufactured by SEIKO PMC CORPORATION), NOPCOSPERSE (registered trademark) 6100 and 6110 (manufactured by SAN NOPCO LIMITED), Joncryl 67, 586, 611, 678, 680, 682, and 819 (manufactured by BASF SE), DISPER BYK-190 (manufactured by BYK Japan KK.), and N-EA137, N-EA157, N-EA167, N-EA177, N-EA197D, N-EA207D, and E-EN10 (manufactured by DKS Co., Ltd.).

In addition, examples of commercially available products of the acrylic resin dispersants include BYK-187, BYK-190, BYK-191, BYK-194N, and BYK-199 (manufactured by BYK Japan KK.), and Aron A-210, A6114, AS-1100, AS-1800, A-30SL, A-7250, and CL-2 (manufactured by TOAGOSEI CO., LTD.).

Further, examples of commercially available products of the urethane-based resin dispersant include BYK-182, BYK-183, BYK-184, and BYK-185 (manufactured by BYK Japan KK.), TEGO Dispers 710 (manufactured by Evonik Tego Chemi GmbH), and Borchi (registered trademark) Gen 1350 (manufactured by OMG Borchers GmbH).

These dispersants may be used alone or in combination of two or more thereof. The total content of the dispersant is preferably 0.1 parts by mass or more and 30 parts by mass or less, more preferably 0.5 parts by mass or more and 25 parts by mass or less, even more preferably 1 part by mass or more and 20 parts by mass or less, and still even more preferably 1.5 parts by mass or more and 15 parts by mass or less, with respect to 50 parts by mass of the pigment. When the content of the dispersant is 0.1 parts by mass or more with respect to 50 parts by mass of the pigment, the dispersion stability of the pigment can be further enhanced. In addition, when the content of the dispersant is 30 parts by mass or less with respect to 50 parts by mass of the pigment, the viscosity of the obtained dispersion can be suppressed to be small.

By using such a resin dispersant as the dispersant, the dispersion and cohesion of the pigment are further improved, and an image having more favorable dispersion stability and more favorable image quality can be obtained.

The dispersant resin preferably has an acid value, and the acid value is preferably 5 mg KOH/g or more, more preferably 10 to 200 mg KOH/g, and even more preferably 15 to 150 mg KOH/g. Further, an acid value of 20 to 100 mg KOH/g is preferable, and an acid value of 25 to 70 mg KOH/g is more preferable.

The acid value can be measured by the neutralization titration method in accordance with JIS K 0070. As a titration device, for example, "AT610" manufactured by Kyoto Electronics Manufacturing Co., Ltd. can be used.

When the ink jet composition contains a pigment, the content of the pigment is preferably 0.3% by mass or more and 20% by mass or less, and more preferably 0.5% by mass or more and 15% by mass or less, based on the total mass of the ink jet composition. Further, the content is preferably 1% by mass or more and 10% by mass or less, and more preferably 2% by mass or more and 7% by mass or less.

When the ink jet composition contains a pigment, the ink jet composition becomes a colored ink jet composition. When the ink jet composition is a colored ink composition, the solid components (resin, pigment) tend to increase, making it easier to reduce the adhesion of the glue layer of the fabric transport member. However, by using the cleaning liquid of the present embodiment, the transportability of the fabric transport member can be maintained well even when such a colored ink jet composition is used.

On the other hand, when the ink jet composition contains the organopolysiloxane compound mentioned above, the ink jet composition may be substantially free of colorants. By doing so, the ink jet composition can be a clear ink and function as a softening liquid. In this way, it is easier to obtain better texture and color development (higher density) for recorded matter, and although problems with contamination of the fabric transport member are prone to occur, excellent cleaning performance can be achieved with the cleaning liquid. In this way, the ink jet composition can function as a so-called softening liquid or coating liquid, making it easier to obtain a better texture for recorded matter, and although problems with contamination of the fabric transport member are prone to occur, excellent cleaning performance can be achieved with the cleaning liquid.

When the ink jet composition is a functional liquid containing the organopolysiloxane compound mentioned above, the content of particles containing organopolysiloxane is preferably 90.0% by mass or more relative to the total solid components of the functional liquid. That is, it is preferable that 90.0% by mass or more of the solid components remaining when the functional liquid is dried is organopolysiloxane. The content of particles containing organopolysiloxane relative to the total solid components in the functional liquid is more preferably 95.0% by mass or more, further preferably 98% by mass or more, and particularly preferably 99.0% by mass or more.

When the content of particles containing organopolysiloxane relative to the total solid components in the functional liquid is 90% by mass or more, it tends to be easier to form a coating film with a sufficiently low refractive index, and it is possible to form images with better color development. Further, the texture of the recorded matter can be further improved. In addition, when the treatment solution composition is discharged by an ink jet method, the discharge stability is likely to be further favorable.

In the present specification, "substantially free of a certain component" refers to the content of the component being 0.1% by mass or less, preferably 0.01% by mass or less, and more preferably 0.001% by mass or less, relative to the total amount of the composition, and most preferably, it means that the component is not contained at all.

### (2) Organic Solvent

The ink jet composition may contain an organic solvent. It is preferable that the organic solvent is a water-soluble organic solvent. One of the functions of the organic solvent is to improve the wettability of the ink jet composition to the fabric and to enhance the moisturizing properties of the ink jet composition. The organic solvent can also function as a penetrant.

Examples of the organic solvent include esters, alkylene glycol ethers, cyclic esters, nitrogen-containing solvents, and polyhydric alcohols. Examples of the nitrogen-containing solvents include cyclic amides and acyclic amides. Examples of the acyclic amides include alkoxyalkylamides and the like.

Examples of the esters include glycol monoacetates such as ethylene glycol monomethyl ether acetate, ethylene glycol monoethyl ether acetate, and ethylene glycol monobutyl ether acetate, and glycol diesters such as ethylene glycol diacetate, diethylene glycol diacetate, and propylene glycol diacetate.

Examples of the cyclic esters include cyclic esters (lactones) such as β-propiolactone, γ-butyrolactone, δ-valerolactone, ε-caprolactone, and β-butyrolactone, and compounds in which a hydrogen of a methylene group adjacent to a carbonyl group thereof is substituted with an alkyl group having 1 to 4 carbon atoms.

Examples of the alkoxyalkylamides include 3-methoxy-N,N-dimethylpropionamide, 3-methoxy-N,N-diethylpropionamide, 3-methoxy-N,N-methylethylpropionamide, 3-ethoxy-N,N-dimethylpropionamide, 3-ethoxy-N,N-diethylpropionamide, 3-ethoxy-N,N-methylethylpropionamide, 3-n-butoxy-N,N-dimethylpropionamide, 3-n-butoxy-N,N-diethylpropionamide, and 3-n-butoxy-N,N-methylethylpropionamide.

Examples of the cyclic amides include lactams, and examples thereof include pyrrolidones such as 2-pyrrolidone, 1-methyl-2-pyrrolidone, 1-ethyl-2-pyrrolidone, 1-propyl-2-pyrrolidone, and 1-butyl-2-pyrrolidone.

In addition, it is also preferable to use compounds represented by Formula (1) as the alkoxyalkylamides.

R¹-O-CH₂CH₂-(C=O)-NR²R³ ... (1)

In Formula (1), R¹ represents an alkyl group having 1 or more and 4 or fewer carbon atoms, and R² and R³ each independently represent a methyl group or an ethyl group. The "alkyl group having 1 or more and 4 or fewer carbon atoms" may be a linear or branched alkyl group, and examples thereof include a methyl group, an ethyl group, an n-propyl group, an iso-propyl group, an n-butyl group, a sec-butyl group, an iso-butyl group, and a tert-butyl group. The compounds represented by Formula (1) may be used alone or as a mixture of two or more thereof.

Examples of the polyhydric alcohols include 1,2-alkanediol (for example, alkanediols such as ethylene glycol, propylene glycol (alias: propane-1,2-diol), 1,2-butanediol, 1,2-pentanediol, 1,2-hexanediol, 1,2-heptanediol, and 1,2-octanediol), and polyhydric alcohols (polyols) excluding the 1,2-alkanediol (for example, diethylene glycol, dipropylene glycol, 1,3-propanediol, 1,3-butanediol (alias: 1,3-butylene glycol), 1,4-butanediol, 1,5-pentanediol, 1,6-hexanediol, 2-ethyl-2-methyl-1,3-propanediol, 2-methyl-2-propyl-1,3-propanediol, 2-methyl-1,3-propanediol, 2,2-dimethyl-1,3-propanediol, 3-methyl-1,3-butanediol, 2-ethyl-1,3-hexanediol, 3-methyl-1,5-pentanediol, 2-methylpentane-2,4-diol, trimethylol propane, and glycerin).

The polyhydric alcohols may include alkanediols and polyols. The alkanediols are diols of an alkane having 5 or more carbon atoms. The number of carbon atoms of the alkane is preferably 5 to 15, more preferably 6 to 10, and even more preferably 6 to 8. 1,2-alkanediol is preferable.

The polyols are polyols of alkane having 4 or fewer carbon atoms or intermolecular condensates of hydroxyl groups of polyols of alkane having 4 or fewer carbon atoms. The number of carbon atoms of the alkane is preferably 2 to 3. The number of the hydroxyl groups in the molecule of the polyols is 2 or more, preferably 5 or fewer, and more preferably 3 or fewer. When the polyols are the intermolecular condensates described above, the number of intermolecular condensates is 2 or more, preferably 4 or fewer, and more preferably 3 or fewer. The polyhydric alcohols may be used alone or as a mixture of two or more types thereof.

The alkanediols and polyols can mainly function as a penetrating solvent and/or a moisturizing solvent. However, the alkanediols tend to have strong properties as the penetrating solvent, and polyols tend to have strong properties as the moisturizing solvent.

One kind of organic solvent may be used alone, or two or more kinds thereof may be used in combination. When the ink jet composition contains an organic solvent, the content of the organic solvent can be 1% by mass or more and 50% by mass or less with respect to the total amount of the ink jet composition, preferably 3% by mass or more and 40% by mass or less, and more preferably 5% by mass or more and 30% by mass or less.

### (3) Surfactant

The ink jet composition according to the present embodiment may contain a surfactant. The surfactant has a function of adjusting the surface tension of the composition and adjusting, for example, the wettability with the fabric. Among the surfactants, for example, acetylene glycol-based surfactant, silicone-based surfactant, and fluorine-based surfactant can be preferably used.

The acetylene glycol-based surfactant is not particularly limited and examples thereof include SURFYNOL 104, 104E, 104H, 104A, 104BC, 104DPM, 104PA, 104PG-50, 104S, 420, 440, 465, 485, SE, SE-F, 504, 61, DF37, CT111, CT121, CT131, CT136, TG, GA, and DF110D (all trade names, manufactured by Air Products & Chemicals. Inc.), OLFINE B, Y, P, A, STG, SPC, E1004, E1010, PD-001, PD-002W, PD-003, PD-004, EXP. 4001, EXP. 4036, EXP. 4051, AF-103, AF-104, AK-02, SK-14, and AE-3 (all trade names, manufactured by Nissin Chemical Industry Co., Ltd.), and ACETYLENOL E00, E00P, E40, and E100 (all trade names, manufactured by Kawaken Fine Chemicals Co., Ltd.).

The silicone-based surfactant is not particularly limited and examples thereof preferably include a polysiloxane-based compound. The polysiloxane-based compound is not particularly limited and examples thereof include polyether-modified organosiloxane. Examples of commercially available products of the polyether-modified organosiloxane include BYK-306, BYK-307, BYK-333, BYK-341, BYK-345, BYK-346, and BYK-348 (all trade names, manufactured by BYK Japan KK.), KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (all trade names, manufactured by Shin-Etsu Chemical Co., Ltd.), and SILFACE SAG002, 005, 503A, 008 (all trade names, manufactured by Nissin Chemical Industry Co., Ltd.).

As the fluorine-based surfactant, a fluorine-modified polymer is preferably used, and specific examples thereof include BYK-3440 (manufactured by BYK Japan KK.), SURFLON S-241, S-242, and S-243 (all trade names, manufactured by AGC SEIMI CHEMICAL CO., LTD.), and FTERGENT 215M (manufactured by NEOS COMPANY LIMITED).

When the ink jet composition contains a surfactant, the ink jet composition may contain multiple types. When the ink jet composition contains a surfactant, the content of the surfactant can be 0.1% by mass or more and 2% by mass or less, preferably 0.3% by mass or more and 1.5% by mass or less, and more preferably 0.4% by mass or more and 1.0% by mass or less, based on the total mass of the ink jet composition.

### (4) Coagulant

The ink jet composition may contain a coagulant. The coagulant has the effect of coagulating pigments and resin particles by reacting with components such as pigments and resin particles contained in the ink jet composition or other ink jet compositions used together. Through such coagulation, for example, the color development of the pigment can be enhanced, the fixability of resin particles can be improved, and/or the viscosity of the composition can be increased. When the ink jet composition is a composition containing a coagulant (hereinafter also referred to as a reactive liquid), it is preferable that the reactive liquid is free of a pigment. Further, it is preferable that the reactive liquid is free of resin particles that react with the coagulant. Examples of resin particles that react with the coagulant include anionic resin particles.

The coagulant is not particularly limited and examples thereof include metal salts, inorganic acids, organic acids, and cationic compounds. Among the compounds, particles of the aforementioned cationic resins (cationic polymers) as cationic compounds also correspond to the aforementioned resin particles.

When the ink jet composition contains a coagulant, the ink jet composition can function as a reactive liquid.

The total content of the coagulant in the ink jet composition is not limited, but for example, is 0.1% by mass or more and 15% by mass or less based on the total mass of the composition, preferably 1% by mass or more and 10% by mass or less, and more preferably 2% by mass or more and 10% by mass or less.

### (5) Other Components

The ink jet composition may contain components other than those mentioned above, such as the following.

### Fatty Acid Ester

Examples of the fatty acid ester include polyoxyethylene monocaprate, polyoxyethylene monocaprylate, polyoxyethylene monolaurate, polyoxyethylene monomyristylate, polyoxyethylene monopalmitate, polyoxyethylene monostearate, polyoxyethylene monooleate, polyoxyethylene monostearate, polyoxyethylene monobehenate, polyoxyethylene dicaprate, polyoxyethylene dicaprylate, polyoxyethylene dilaurate, polyoxyethylene dimyristylate, polyoxyethylene dipalmitate, polyoxyethylene distearate, polyoxyethylene dioleate, polyoxyethylene diisostearate, and polyoxyethylene dibehenate. Dialkyldimethylammonium Salt

Examples of the dialkyldimethylammonium salt include dioleoyloxytrimethylammonium propane chloride (DOTAP), dioctadecenyltrimethylammonium propane chloride (DOTMA), didecylmethylammonium chloride, didecyldimethylammonium bromide, dicocoyldimethylammonium chloride, dicocoyldimethylammonium bromide, dilauryldimethylammonium chloride, dicetyldimethylammonium chloride, dicetyldimethylammonium bromide, distearyldimethylammonium chloride, distearyldimethylammonium bromide, dioleyldimethylammonium chloride, dibehenyldimethylammonium chloride, dibehenyldimethylammonium bromide, dialkyldimethylammonium chloride, dialkyldimethylammonium bromide, dicocoylethyl hydroxyethylmonium methosulfate, dipalmitoylethyl hydroxyethylmonium methosulfate, and distearoylethylhydroxyethylmonium methosulfate.

### Imidazoline-Type Surfactant

Examples of the imidazoline-type surfactant include 1-hydroxyethyl-2-lauryl imidazoline, 1-aminoethyl-2-lauryl imidazoline, 1-hydroxyethyl-2-myristyl imidazoline, 1-aminoethyl-2-myristyl imidazoline, 1-hydroxyethyl-2-palmityl imidazoline, 1-aminoethyl-2-palmityl imidazoline, 1-hydroxyethyl-2-oleyl imidazoline, 1-aminoethyl-2-oleyl imidazoline, 1-hydroxyethyl-2-stearyl imidazoline, 1-aminoethyl-2-stearyl imidazoline, 2-alkyl-N-carboxymethylimidazolinium betaine, 2-alkyl-N-carboxyethyl imidazolinium betaine, and 2-alkyl-N-carboxymethyl-N-hydroxyethylimidazolinium betaine.

### Amphoteric Surfactant

Examples of the amphoteric surfactant include alkyl carboxybetaine, alkyl sulfobetaine, alkyl hydroxy sulfobetaine, alkylamide betaine, lauryl dimethylamine oxide, and lauric acid amidopropyl dimethylamine oxide.

### Water-soluble Resin

The water-soluble resin are not particularly limited and examples thereof include carboxymethyl cellulose, hydroxyethyl cellulose, polyvinylpyrrolidone, and polyethylene oxide. Among these, a nonionic resin is more preferable, and for example, polyvinylpyrrolidone is more preferable. The polyvinylpyrrolidone is not limited to a homopolymer, and a copolymer of vinylpyrrolidone and other monomers may be used. Examples of commercially available products of polyvinylpyrrolidone include polyvinylpyrrolidone K-30 and K-30W (hereinabove, all trade names, manufactured by Nippon Shokubai Co., Ltd.), PITZCOL (registered trademark) K-17L, K-30, K-30L, and K-30AL, K-60L, K-30, K-50, K-90 CREEJUS (registered trademark) K-30, and AIPHTACT (registered trademark) K-30PH (hereinabove, all trade names, manufactured by DKS Co., Ltd.), and PVP K-30, PVP K-25, and PVP K-17 (trade names, manufactured by Ashland). Moisturizing Agent

The moisturizing agent is not particularly limited and examples thereof include glycerin, 2-pyrrolidone, urea, triethanolamine, propylene glycol, 1-(2-hydroxyethyl)-2-pyrrolidone, trimethylolpropane, triethylene glycol, 1,5-pentanediol, triethylene glycol monomethyl ether, and amino coat. Among these, one moisturizing agent can be used alone or two or more thereof can be used in combination.

### Additive

Examples of the additive include a pH-adjusting agent, a saccharide, a chelating agent, a preservative and a fungicide, a rust inhibitor, and others.

The pH-adjusting agent is not particularly limited and examples thereof include an appropriate combination of an acid, a base, a weak acid, and a weak base. Examples of acids and bases used in such a combination include inorganic acids such as sulfuric acid, hydrochloric acid, and nitric acid, inorganic bases such as lithium hydroxide, sodium hydroxide, potassium hydroxide, dihydrogen potassium phosphate, hydrogen disodium phosphate, potassium carbonate, sodium carbonate, hydrogen sodium carbonate, and ammonia, organic bases such as triethanol amine, diethanol amine, monoethanol amine, tripropanol amine, triisopropanol amine, diisopropanol amine, and tris(hydroxymethyl)aminomethane (THAM), and organic acids such as adipic acid, citric acid, succinic acid, lactic acid, Good's buffers such as N,N-bis(2-hydroxyethyl)-2-aminoethanesulfonic acid (BES), 4-(2-hydroxyethyl)-1-piperazineethanesulfonic acid (HEPES), morpholinoethanesulfonic acid (MES), carbamoylmethyl iminobisacetic acid (ADA), piperazine-1,4-bis(2-ethanesulfonic acid) (PIPES), N-(2-acetamide)-2-aminoethanesulfonic acid (ACES), cholamine chloride, N-tris(hydroxymethyl)methyl-2-aminoethanesulfonic acid (TES), acetamide glycine, tricine, glycine amide, and bicine, a phosphate buffer solution, a citrate buffer solution, and a tris buffer solution. Further, among these, a tertiary amine such as triethanolamine or triisopropanolamine and a carboxy group-containing organic acid such as adipic acid, citric acid, succinic acid, or lactic acid are preferably contained as a part or the whole of the pH-adjusting agent since the pH buffering effect can be more stably obtained.

Specific examples of saccharides include glucose, mannose, fructose, ribose, xylose, arabinose, galactose, aldonic acid, glucitol (sorbitol), maltose, cellobiose, lactose, sucrose, trehalose, and maltotriose.

Examples of the chelating agent include ethylenediaminetetraacetic acid and salts thereof (such as ethylenediaminetetraacetic acid dihydrogen disodium salt, ethylene diamine nitrilotriacetate, hexametaphosphate, pyrophosphate, and metaphosphate).

Examples of the preservative and the fungicide include sodium benzoate, sodium pentachlorophenolate, sodium 2-pyridinethiol-1-oxide, sodium sorbate, sodium dehydroacetate, PROXEL CRL, PROXEL BDN, PROXEL GXL, PROXEL XL-2, PROXEL IB, and PROXEL TN (trade names, all manufactured by LONZA KK.), and 4-chloro-3-methylphenol (such as PREVENTOL CMK manufactured by Bayer AG).

Examples of the rust inhibitor include benzotriazole, acidic sulfite, sodium thiosulfate, ammonium thioglycolic acid, diisopropylammonium nitrite, pentaerythritol tetranitrate, and dicyclohexylammonium nitrite. Among these, benzotriazole is particularly preferred.

### 1.3. Ink Jet Textile Printing Recording Apparatus

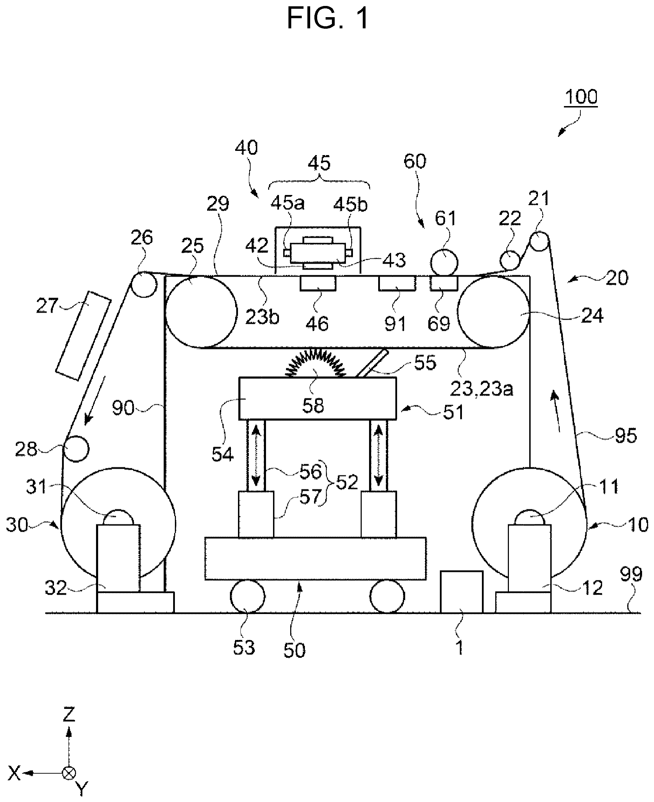

The cleaning liquid according to the present embodiment is used for cleaning the fabric transport member of an ink jet textile printing recording apparatus. An example of an ink jet textile printing apparatus (recording apparatus) to which the set according to the present embodiment can be applied will be described with reference to FIG. 1.

The scales of each layer and each member illustrated in FIG. 1 are made different from the actual scales thereof to be visually recognized in the drawing. In addition, for the convenience of illustration in FIG. 1, as three axes orthogonal to each other, an X axis, a Y axis, and a Z axis are illustrated, a front end side of each arrow indicating an axis direction illustrated in the drawing is represented by "+ side", and a base end side thereof is represented by "- side". A direction parallel to the X axis, a direction parallel to the Y axis, and a direction parallel to the Z axis are represented by an "X axis direction", a "Y axis direction", and a "Z axis direction", respectively.

### 1.3.1. Overall Schematic Configuration

FIG. 1 is a schematic diagram illustrating a schematic overall configuration of a recording apparatus 100. First, the overall configuration of the recording apparatus 100 will be described with reference to FIG. 1.

As illustrated in FIG. 1, the recording apparatus 100 includes a fabric transport section 20, a fabric adhesion section 60, a belt support section 91, a print section 40, a heating unit 27, a cleaning unit 50, and the like. In the recording apparatus 100, at least one of the fabric adhesion section 60 and the belt support section 91 corresponds to a heating section that heats the endless belt 23. In addition, the recording apparatus 100 also includes a control section 1 to control each of these sections described above. Each of the sections of the recording apparatus 100 is attached to a frame section 90.

When a heating section for heating the endless belt is provided, the heating section only needs to be located upstream in the transport direction relative to the print section 40, and may be provided at a location different from a position of the fabric adhesion section 60 and the belt support section 91. For example, the heating section may be located upstream in the transport direction relative to the fabric adhesion section 60. With such a configuration, the heating section can also dry the endless belt 23 wetted during cleaning. In addition, the heating section may be a section to heat the endless belt in a non-contact manner.

The fabric transport section 20 transports the fabric 95 in the transport direction. The fabric transport section 20 includes a fabric supply section 10, transport rollers 21 and 22, the endless belt 23, the belt rotation roller 24, a belt drive roller 25 as a drive roller, transport rollers 26 and 28, and a fabric collection section 30.

The fabric is not particularly limited. The material constituting the fabric is not particularly limited, examples thereof include natural fibers such as cotton, linen, wool, and silk, synthetic fibers such as polypropylene, polyester, acetate, triacetate, polyamide, and polyurethane, and biodegradable fibers such as polylactic acid, and blended fibers thereof may be used. As the fabric, the fibers described above may be in any form such as a woven fabric, a knitted fabric, and a non-woven fabric, and may be mixed fibers.

### 1.3.2. Fabric Transport Section

First, the transport path of the fabric 95 from the fabric supply section 10 to the fabric collection section 30 will be described. In addition, in FIG. 1, a direction along a direction in which the gravity works is represented by the Z axis direction, a direction in which the fabric 95 is transported in the print section 40 is represented by the +X axis direction, and a width direction of the fabric 95 intersecting both the Z axis direction and the X axis direction is represented by the Y axis direction. In addition, the positional relationship along the transport direction of the fabric 95 or the moving direction of the endless belt 23 is also represented by "upstream" or "downstream".

In the present specification, the fabric transport member is assumed to correspond to the endless belt 23.

The fabric supply section 10 supplies the fabric 95, on which an image is to be formed, to the print section 40 side. The fabric supply section 10 has a supply shaft section 11 and a bearing section 12. The supply shaft section 11 is formed to have a cylindrical shape or a columnar shape and is provided to be rotatable in a circumferential direction. The strip-shaped fabric 95 is wound around the supply shaft section 11 in a roll shape. The supply shaft section 11 is detachably attached to the bearing section 12. Accordingly, the fabric 95 wound around the supply shaft section 11 in advance can be attached to the bearing section 12 together with the supply shaft section 11.

The bearing section 12 rotatably supports both ends of the supply shaft section 11 in a shaft direction. The fabric supply section 10 has a rotation drive section (not illustrated) that rotatably drives the supply shaft section 11. The rotation drive section rotates the supply shaft section 11 in a direction to which the fabric 95 is supplied. The operation of the rotation drive section is controlled by the control section 1. The transport rollers 21 and 22 relay the fabric 95 from the fabric supply section 10 to the endless belt 23.

The endless belt 23 is held between at least two rollers to rotate the endless belt 23. Since the endless belt 23 rotationally moves, the fabric 95 is transported in the transport direction (+X axis direction) while being supported by the endless belt 23. Specifically, the endless belt 23 is a seamless belt formed such that both end sections of a strip-shaped belt are seamlessly coupled to each other, and is set between two rollers of the belt rotation roller 24 and the belt drive roller 25. By adopting an endless belt 23 without seams rather than a belt with seams, more stable transport of the fabric can be achieved.

The endless belt 23 is held in a state where a predetermined tension is applied thereto so that a section between the belt rotation roller 24 and the belt drive roller 25 is held flat along the horizontal direction. A surface (support surface) 23a of the endless belt 23 is applied with a pressure sensitive adhesive layer 29 that adheres the fabric 95. That is, the endless belt 23 has the pressure sensitive adhesive layer 29 made of an adhesive. The pressure sensitive adhesive layer 29 is also referred to as a glue layer, and can adhere the fabric 95 as well as allow the fabric 95 to be peeled off.

The fabric 95 is attached to the endless belt 23 via the pressure sensitive adhesive layer 29. The endless belt 23 supports (holds) the fabric 95, which is supplied from the transport roller 22 and adhered to the pressure sensitive adhesive layer 29 in the fabric adhesion section 60 described later.

It is preferable that the adhesion of the pressure sensitive adhesive layer 29 increases when heated. By using the pressure sensitive adhesive layer 29 whose adhesion increases upon heating, the fabric 95 can be brought into good contact with the pressure sensitive adhesive layer. Examples of such a pressure sensitive adhesive layer 29 include hot-melt adhesives mainly composed of thermoplastic elastomer SIS (styrene-isoprene-styrene).

The belt rotation roller 24 and the belt drive roller 25 support an inner circumferential surface 23b of the endless belt 23. Between the belt rotation roller 24 and the belt drive roller 25, a contact section 69 to support the endless belt 23, the belt support section 91, and a platen 46 are provided. The contact section 69 is provided in a region facing a press section 61 which will be described later with the endless belt 23 interposed therebetween, the platen 46 is provided in a region facing the print section 40 with the endless belt 23 interposed therebetween, and the belt support section 91 is provided between the contact section 69 and the platen 46. Since the contact section 69, the belt support section 91, and the platen 46 support the endless belt 23, the endless belt 23 is prevented from being vibrated in conjunction with the movement of the endless belt 23.

The belt drive roller 25 is a drive section to transport the fabric 95 in the transport direction by rotating the endless belt 23 and has a motor (not illustrated) to rotatably drive the belt drive roller 25. The belt drive roller 25 is provided downstream than the print section 40 in the transport direction of the fabric 95, and the belt rotation roller 24 is provided upstream than the print section 40. When the belt drive roller 25 is rotatably driven, the endless belt 23 is rotated in conjunction with the rotation of the belt drive roller 25, and by the rotation of the endless belt 23, the belt rotation roller 24 is rotated. Since the endless belt 23 is rotated, the fabric 95 supported by the endless belt 23 is transported in the transport direction (+X axis direction), and an image is formed at the fabric 95 on the print section 40 described later.

In the example illustrated in FIG. 1, the fabric 95 is supported at the side (+Z axis side) at which the surface 23a of the endless belt 23 faces the print section 40, and the fabric 95 is transported together with the endless belt 23 from the belt rotation roller 24 side to the belt drive roller 25 side. In addition, the endless belt 23 is only moved from the belt drive roller 25 side to the belt rotation roller 24 side at the side (-Z axis side) at which the surface 23a of the endless belt 23 faces the cleaning unit 50.

The transport roller 26 peels off the fabric 95, on which an image is formed, from the pressure sensitive adhesive layer 29 of the endless belt 23. The transport rollers 26 and 28 relay the fabric 95 from the endless belt 23 to the fabric collection section 30.

The fabric collection section 30 collects the fabric 95 transported by the fabric transport section 20. The fabric collection section 30 has a winding shaft section 31 and a bearing section 32. The winding shaft section 31 is formed in a cylindrical or columnar shape and is provided to be rotatable in a circumferential direction. The strip-shaped fabric 95 is wound around the winding shaft section 31 in a roll shape. The winding shaft section 31 is detachably attached to the bearing section 32. Accordingly, the fabric 95 wound around the winding shaft section 31 is removed together with the winding shaft section 31.

The bearing section 32 rotatably supports both ends of the winding shaft section 31 in a shaft direction. The fabric collection section 30 has a rotation drive section (not illustrated) that rotatably drives the winding shaft section 31. The rotation drive section rotates the winding shaft section 31 in a direction in which the fabric 95 is wound. The operation of the rotation drive section is controlled by the control section 1.

Next, the heating section, the print section 40, the heating unit 27, and cleaning unit 50, which are provided along the fabric transport section 20, will be described.

### 1.3.3. Heating Section

It is preferable that a heater which heats the endless belt 23 is provided in at least one of the contact section 69 and the belt support section 91. The heater constitutes the heating section. When the heater is provided in the contact section 69, a pressing force and heat can be applied to the endless belt 23 by the press section 61, which is preferable from the viewpoint that the adhesion of the fabric 95 to the endless belt 23 can be improved. Accordingly, when being provided in the contact section 69 or the belt support section 91, the heater is more preferably provided at the contact section 69.

The heating section softens the pressure sensitive adhesive layer by heating the adhesive layer to exhibit adhesiveness, thereby improving the adhesion between the fabric 95 and the pressure sensitive adhesive layer. Accordingly, the fabric 95 is prevented from moving on the endless belt 23. Thus, favorable transport accuracy can be obtained.

When the heater is provided in at least one of the contact section 69 and the belt support section 91 and the endless belt 23 is heated, the temperature of the surface 23a of the endless belt 23 is preferably 80°C or lower, more preferably 70°C or lower, and even more preferably 60°C or lower. When the temperature of the surface 23a of the endless belt 23 is within the above range, the reactivity of the resin particles contained in the ink jet composition can be suppressed, making it easier to clean the belt. The lower limit of the temperature of the surface 23a of the endless belt 23 is not particularly limited as long as the temperature causes the adhesiveness of the pressure sensitive adhesive layer to be exhibited, and is preferably 30°C or higher, more preferably 35°C or higher, and still more preferably 40°C or higher. The temperature of the surface 23a of the endless belt 23 can be measured, for example, by a radiation-type thermometer, a contact-type thermometer, or the like, and the temperature described above is more preferably measured by a radiation-type thermometer.

When the heater is provided in at least one of the contact section 69 or the belt support section 91, a temperature detection section (not illustrated) that detects the surface temperature of the endless belt 23 may be provided. As the temperature detection section, for example, a thermocouple or the like can be used. Accordingly, since the heater is controlled by the control section 1 based on the temperature detected by the temperature detection section, the endless belt 23 can have a predetermined temperature. The temperature detection section may also use a non-contact type thermometer using infrared rays.

### 1.3.4. Print Section

The print section 40 is arranged at an upper side (+Z axis side) with respect to the arrangement position of the endless belt 23 and performs printing on the fabric 95 placed on the surface 23a of the endless belt 23. The print section 40 includes an ink jet head 42, a carriage 43 on which the ink jet head 42 is mounted, and a carriage moving section 45 which moves the carriage 43 in the width direction (Y axis direction) of the fabric 95 intersecting the transport direction.

The ink jet head 42 is a tool for ejecting and adhering the ink jet composition supplied from a liquid cartridge (not illustrated) onto the fabric 95 from a plurality of nozzles under the control of the control section 1. The ink jet head 42 includes the plurality of nozzles that discharge the ink jet composition onto the fabric 95 to which the ink jet composition is to be adhered. The plurality of nozzles are arranged in a row, forming a nozzle array, and the nozzle arrays are individually disposed corresponding to the ink jet composition. The ink jet composition is supplied from each liquid cartridge to the ink jet head 42 and is discharged as droplets from the nozzles by an actuator (not illustrated) within the ink jet head 42. The discharged droplets of the ink jet composition land on the fabric 95, and images, text, patterns, colors, and the like are formed in the printing area of the fabric 95.

The ink jet composition referred to here can be the ink jet composition described above. In addition, the type and number of these ink jet compositions can be set as appropriate.

Here, in the ink jet head 42, a piezoelectric element is used as an actuator which is a drive unit, but the method is not limited thereto. For example, an electromechanical transducer that displaces a diaphragm as an actuator by electrostatic attraction, or an electrothermal transducer that discharges the ink jet composition as droplets by bubbles generated by heating, may be used.

The carriage moving section 45 is provided on the upper side (+Z axis side) of the endless belt 23. The carriage moving section 45 has a pair of guide rails 45a and 45b extending along the Y axis direction. The ink jet head 42 is supported by the guide rails 45a and 45b to be reciprocally movable along the Y axis direction together with the carriage 43.

The carriage moving section 45 includes a moving mechanism (not illustrated) and a power source. As the moving mechanism, for example, a mechanism in which a ball screw and a ball nut are combined, a linear guide mechanism, or the like can be used. The carriage moving section 45 includes a motor (not illustrated) as the power source for moving the carriage 43 along the guide rails 45a and 45b. As the motor, various motors such as a stepping motor, a servo motor, and a linear motor can be used. When the motor is driven under the control of the control section 1, the ink jet head 42 moves in the Y axis direction together with the carriage 43. 1.3.5. Heating Unit

The heating unit 27 may be provided between the transport roller 26 and the transport roller 28. The heating unit 27 heats the ink jet composition discharged onto the fabric 95. This tends to sufficiently promote the reaction of the resin particles contained in the ink jet composition. Since the resin particles sufficiently react, an image having favorable rubbing fastness may be formed in some cases. The heating unit 27 may be used to dry the fabric 95. For example, the heating unit 27 includes an IR heater, and by driving the IR heater, the ink jet composition discharged onto the fabric 95 can be reacted in a short time. Accordingly, the strip-shaped fabric 95 on which an image or the like is formed can be wound around the winding shaft section 31.

### 1.3.6. Cleaning Unit

The cleaning unit 50 is arranged between the belt rotation roller 24 and the belt drive roller 25 in the X axis direction. The cleaning unit 50 includes a cleaning section 51, a press section 52, and a movement section 53. The movement section 53 integrally moves the cleaning unit 50 along a floor surface 99 and then fixes the cleaning unit 50 at a predetermined position.

The press section 52 is an elevating device formed, for example, of an air cylinder 56 and a ball bush 57 and enables the cleaning section 51 provided on the upper side to come into contact with the surface 23a of the endless belt 23. The cleaning section 51 is set between the belt rotation roller 24 and the belt drive roller 25 with a predetermined tension applied, and carries out the cleaning of the surface (support surface) 23a of the endless belt 23 moving from the belt drive roller 25 toward the belt rotation roller 24 from a bottom side (-Z axis direction).

The cleaning section 51 includes a cleaning tank 54, a cleaning roller 58, and a blade 55. The cleaning tank 54 stores a cleaning liquid used to clean ink and foreign matter adhered to the surface 23a of the endless belt 23, and the cleaning roller 58 and the blade 55 are provided inside the cleaning tank 54. For this cleaning liquid, for example, water or a water-soluble solvent (such as an alcohol aqueous solution) can be used, and the cleaning liquid according to the present embodiment mentioned above may also be used.

When the cleaning roller 58 is rotated, the cleaning liquid is supplied to the surface 23a of the endless belt 23, and at the same time, the cleaning roller 58 and the endless belt 23 come into sliding contact with each other. As a result, the ink jet composition, fibers of the fabric 95, and the like adhered to the endless belt 23 are removed by the cleaning roller 58.

The blade 55 may be formed of, for example, a flexible material such as a silicone rubber. The blade 55 is provided closer to downstream than the cleaning roller 58 in the transport direction of the endless belt 23. Since the endless belt 23 and the blade 55 come into sliding contact with each other, the cleaning liquid remaining on the surface 23a of the endless belt 23 is removed.

Such a recording apparatus 100 enables recording on fabric using an ink jet composition.

### 1.4. Effects

In the recording apparatus 100 described above, the ink jet composition is applied to the fabric 95 when the fabric 95 is adhered to the pressure sensitive adhesive layer 29. The ink jet composition used in the recording apparatus 100 is required to have spreading properties on the fabric 95 when wet, in order to ensure hiding power with a small amount of ink droplets. When the ink jet composition is applied to the fabric 95, penetration or bleed-through is prone to occur (especially for mesh fabrics, which inherently have holes and are prone to bleed-through). Further, when the fabric 95 contains chemical fibers, the fibers themselves are less likely to absorb ink, so the ink jet composition may pass directly through to the backside. Moreover, when the fabric 95 is a thin plain-woven fabric, thin fabric, gaps are easily formed because the fibers are made of fine threads. Although the degree of penetration/bleed-through varies depending on the fiber type and fabric type, when the ink jet composition penetrates the fabric 95, the ink jet composition may adhere to the fabric transport member (pressure sensitive adhesive layer 29).

When the ink jet composition penetrates the fabric 95, since the ink jet composition contains resin particles, resin components and oily components become fixed on the fabric transport member (pressure sensitive adhesive layer 29), contaminating the fabric transport member. This reduces the transportability of the fabric transport member (for example, the adhesive force of the glue layer (pressure sensitive adhesive layer 29)), and during image formation, uneven density (for example, fabric lifting or flapping, causing stain-like marks (mottled density differences)) may occur. In addition, lint or fluff separating from the fabric 95 and becoming fixed on the fabric transport member can cause stains, and the like.

In the recording apparatus 100, the pressure sensitive adhesive layer 29 is cleaned by the cleaning unit 50, but particularly when the cleaning liquid is not the cleaning liquid according to the present embodiment described above, the removal of solid components and oily components adhering to the pressure sensitive adhesive layer 29 may be insufficient. Moreover, when the cleaning liquid of the cleaning unit 50 is not the cleaning liquid according to the present embodiment described above, damage to the pressure sensitive adhesive layer 29 (for example, detachment of the pressure sensitive adhesive layer 29 from the belt substrate) may occur.

However, according to the set of the cleaning liquid and ink jet composition of the present embodiment, even when the pressure sensitive adhesive layer 29 is provided to facilitate fixing the fabric to the fabric transport member, contamination of the fabric transport member can be reduced while suppressing the detachment of the pressure sensitive adhesive layer 29. This maintains good transportability of the fabric transport member (adhesive force by the pressure sensitive adhesive layer 29 (glue)) and suppresses uneven density during image formation.

According to the set of the cleaning liquid and ink jet composition of the present embodiment, because the cleaning liquid contains a glycol ether compound and has a surface tension of 40 mN/m or less at 25°C, the cleaning liquid can penetrate between the fabric transport member and the adhered ink jet composition layer, causing the solid components and oily components of the ink jet composition layer to swell or dissolve, thus making it easier for these components to detach. Further, by containing a polyoxyalkylene alkyl ether compound in the cleaning liquid, the detached solid components and oily components can be dispersed, and re-adhesion can be suppressed. This reduces contamination of the fabric transport member while suppressing damage to the fabric transport member (detachment of the glue), maintains good transportability of the fabric transport member (adhesive force of the glue), and suppresses uneven density during image formation.

### 2. Cleaning Liquid

The cleaning liquid according to the present embodiment, as described above, is a cleaning liquid used in an ink jet textile printing recording apparatus. The cleaning liquid contains a glycol ether compound, a polyoxyalkylene alkyl ether compound, and water, and has a surface tension of 40 mN/m or less at 25°C, and is used for cleaning the fabric transport member of the ink jet textile printing recording apparatus to which an ink jet composition is adhered.

According to the cleaning liquid of the present embodiment, since the cleaning liquid contains a glycol ether compound and has a surface tension of 40 mN/m or less at 25°C, the cleaning liquid penetrates between the fabric transport member and the adhered ink jet composition layer, causing the solid components of the ink jet composition layer to swell, thus making it easier for the solid components to detach. Further, by containing a polyoxyalkylene alkyl ether compound, the detached solid components can be dispersed, and re-adhesion of the solid components can be suppressed. This reduces contamination of the fabric transport member while suppressing damage to the fabric transport member (detachment of the glue), maintains good transportability of the fabric transport member (adhesive force of the glue), and suppresses uneven density during image formation.

### 3. Cleaning Method

The cleaning method according to the present embodiment is a method for cleaning an ink jet textile printing recording apparatus, specifically a method for cleaning the fabric transport member of the ink jet textile printing recording apparatus. The fabric transport member is used to adhere the ink jet composition to the fabric by the ink jet method with the fabric placed on the fabric transport member. The method includes a fabric transport member cleaning step of adhering a cleaning liquid to the fabric transport member and cleaning the fabric transport member.

In the fabric transport member cleaning step, the cleaning liquid is adhered to the fabric transport member to clean the fabric transport member. The method for adhering the cleaning liquid to the fabric transport member is not particularly limited and examples thereof include soaking the aforementioned cleaning liquid into a clean wipe or non-woven fabric and then adhering that wipe or non-woven fabric to the fabric transport member to adhere the cleaning liquid, or spraying the aforementioned cleaning liquid onto the fabric transport member using a spray nozzle or a mister. In addition, methods such as applying the cleaning liquid of the present embodiment to the fabric transport member from the cleaning tank 54 of the recording apparatus 100 described above, or, although not illustrated, immersing the fabric transport member in the cleaning liquid of the present embodiment may also be used.

Further, in the fabric transport member cleaning step, the fabric transport member may be rubbed and cleaned with a wipe, non-woven fabric, brush, or the like when the cleaning liquid is adhered to the fabric transport member. When rubbing and cleaning in the fabric transport member cleaning step, it is also preferable to use polyester non-woven fabric or nylon fabric as a cleaning cloth.

According to the cleaning method of the present embodiment, because the cleaning liquid contains a glycol ether compound and has a surface tension of 40 mN/m or less at 25°C, the cleaning liquid penetrates between the fabric transport member and the adhered ink jet composition layer, causing the solid components and oily components of the ink jet composition layer to swell, making it easier for the solid components and oily components to detach. Further, because the cleaning liquid contains a polyoxyalkylene alkyl ether compound, the detached solid components, and the like can be dispersed, and re-adhesion can be suppressed. This reduces contamination of the fabric transport member while suppressing damage to the fabric transport member (detachment of the glue), maintains good transportability of the fabric transport member (adhesive force of the glue), and suppresses uneven density during image formation.

### 4. Examples and Comparative Examples

Hereinafter, the present disclosure will be specifically described with reference to Examples, and the present disclosure is not limited to these Examples. Hereinafter, "part" and "%" are based on mass unless otherwise specified. Unless otherwise specified, the evaluation was performed in an environment of a temperature of 25°C and a relative humidity of 40.0%. 4.1. Preparation of Each Composition

### (1) Preparation of Cleaning Liquid

The cleaning liquid of each example was prepared with the compositions and blending ratios shown in Tables 1 and 2. Each material was mixed according to the composition shown in the table and sufficiently stirred to obtain the cleaning liquid. The numerical values represent the active ingredient concentration, the unit of the values is % by mass, and the total is 100.0% by mass.

### (2) Preparation of Ink Jet Composition

The ink jet composition was prepared with the compositions and blending ratios shown in Tables 3 to 5. The first ink shown in Table 3 is an ink jet composition corresponding to a reactive liquid containing a cationic acrylic resin as a coagulant. The second ink shown in Table 4 is a color ink jet composition containing polycarbonate-based polyurethane, which is a resin emulsion, as resin particles, and a pigment. The third ink shown in Table 5 is an ink jet composition corresponding to a softening liquid containing a cationic silicone oil emulsion as resin particles. Each material was mixed according to the composition shown in the table and sufficiently stirred to obtain the ink jet composition. The numerical values represent the solid component concentration, the unit of the values is % by mass, and the total is 100.0% by mass.

### (3) Ink Set

Table 6 shows the ink set of the ink jet composition used for the evaluation of the example and the comparative example. The ink set shown in Table 6 is an ink set of an ink jet composition and does not correspond to the set of the cleaning liquid and the ink jet composition in the above-described embodiment.

The abbreviations and trade names shown in Tables 1 to 6 are supplemented with description.
- Newcol 1006: Polyoxyalkylene alkyl ether (manufactured by Nippon Nyukazai Co., Ltd.)
- BYK-028: antifoaming agent (manufactured by BYK Japan KK.)
- OLFINE E1010 (acetylene glycol-based surfactant manufactured by Nissin Chemical Industry Co., Ltd.)
Anionic self-dispersing pigment: Manufactured as follows.

500 g of carbon black bulk powder prepared by a furnace method (primary particle diameter = 18 nm, BET specific surface area = 180 m²/g, DBP absorption amount = 186 mL/100 g) was added to 3750 g of ion exchange water, and the temperature was raised to 45°C while carrying out stirring with a dissolver. After that, 30,000 g of an aqueous solution of sodium hypochlorite (effective chlorine concentration = 12%) was added dropwise over 3.5 hours at 45°C while pulverizing with a sand mill using zirconia beads having a diameter of 0.8 mm. Subsequently, the pulverization with the sand mill was continued for a further 30 minutes to obtain a reactive liquid containing a self-dispersing type carbon black. The reactive liquid was filtered using 400 mesh wire net, and thus the zirconia beads and unreacted carbon black were separated from the reactive liquid. A 5% potassium hydroxide aqueous solution was added to the reactive liquid obtained through the separation to adjust the pH to 7.5. Desalination and purification were then carried out using an ultrafiltration membrane until the electrical conductivity of the liquid reached 1.5 mS/cm. Desalination and purification were then further carried out using an electrodialyzer until the electrical conductivity of the liquid reached 1.0 mS/cm. The liquid was concentrated until the concentration of the self-dispersing carbon black reached 17% by mass. The concentrate was subjected to centrifugal separation with a centrifugal separator to remove coarse particles, followed by filtration through a 0.6 µm filter. Ion exchange water was added to the obtained filtrate and diluted until the concentration of the self-dispersing carbon black reached 15% by mass, and dispersed to obtain a self-dispersing pigment dispersion.

Ink 3 in Table 5 was prepared as follows.

90 g of amino-modified silicone oil (KF-868, functional group equivalent: 8, 800 g/mol, manufactured by Shin-Etsu Chemical Co., Ltd.), 173.2g of ion exchange water, 5.1g of polyoxyethylene tridecyl ether (Newcol 1310, Nippon Nyukazai Co., Ltd.), 25.7 g of 1,2-hexanediol, and 6 g of lactic acid were placed in a beaker, and the contents of the beaker were stirred for 30 minutes at 50°C at a rotation speed of 2000 rpm using a homomixer (HOMO MIXER MARK II Model 2.5, manufactured by PRIMIX Corporation), and left to stand for 30 minutes. Next, the content in the beaker was filtered through a 10 µm membrane filter to obtain 300 g of an emulsion in which oil particles containing amino-modified silicone oil were dispersed. Subsequently, ion exchange water and glycerin were added and stirred to prepare ink 3.

Tables 1 and 2 show the surface tensions of the glycol ether compound, polyoxyalkylene alkyl ether compound, and water in the cleaning liquid individually, as well as the surface tension of the cleaning liquid. The surface tension was measured using the Wilhelmy method with a platinum plate in a 25°C environment, using an automatic surface tensiometer CBVP-Z (manufactured by Kyowa Interface Science Co., Ltd.). In addition, triethanolamine was blended so that the pH of the cleaning liquid in each example was between 10 and 11. Further, Table 6 lists the evaluation results for color development, bleeding, yellowing, abrasion resistance (dry), abrasion resistance (wet), and texture (shear hardness G) for each ink set.

### 4.2. Evaluation of Ink Set

Using a modified Evo Tre 16 (manufactured by Seiko Epson Corporation), printing was performed on a 100% cotton white broadcloth (#4000, manufactured by Nisshinbo Industries Inc.) recording medium under the conditions described in Table 6. Main scans were performed a plurality of times on the same scanning area to form a 20 cm × 5 cm solid pattern image on the fabric, which is the recording medium. Subsequently, a 5 cm fabric was transported in the sub-scanning direction, printing was performed again on the same scanning area, and a solid pattern image of 20 cm × 10 cm was formed in the fabric as a medium to be recorded by two times of printing.

As for the belt adhesive, ATR1717 (adhesive, manufactured by ATR Corporation) 520 g and ATR1642 (adhesive, manufactured by ATR Corporation) 1200 g were mixed and prepared. The prepared belt adhesive was applied onto the belt according to the procedures in the user's manual to form a pressure sensitive adhesive layer. Before starting printing, it was confirmed that the adhesive force of the glue layer was 1.0 N/50mm or more using a push-pull gauge (FGP-1, manufactured by Nidec Corporation).

After image formation, the printed textiles of each ink set were produced by starting a heating process at 160°C for 3 minutes in an oven after leaving the printed matter for 3 minutes. The "solid pattern image" means an image where dots are uniformly formed over the entire recording area (main scanning direction × sub-scanning direction: 20 cm × 10 cm) so that the application amount of each ink reaches the numerical values listed in Table 6.

### Evaluation of Color Development (Black)

The black optical density (OD value, Status E) of a surface of a printed image on the printed matter obtained by the above-mentioned printing method was measured using a colorimeter (FD-7, manufactured by Konica Minolta Inc.), and was determined according to the following criteria.

### Determination Criteria

SS: OD value of 1.60 or more
S: OD value of 1.51 or more and less than 1.60
A: OD value of 1.46 or more and less than 1.51
B: OD value of 1.43 or more and less than 1.46
C: OD value of 1.35 or more and less than 1.43

### Evaluation of Bleeding

From the printing methods described above, printed textile samples were prepared by drying the printed textile samples after leaving the printed textile samples for 60 minutes following image formation, then beginning heating process at 160°C for 3 minutes in an oven. In addition, reference samples were prepared from the printed textiles at the point of drying after printing with the first ink (reactive liquid) and the second ink (ink composition). The boundary between the printed image area and the unprinted non-image area was observed, and the difference in length (mm) in the sub-scanning direction between the printed image left for 60 minutes and the reference printed image was determined according to the following criteria.

### Determination Criteria

S: The difference in length is 1 mm or less.
A: The difference in length is more than 1 mm and less than or equal to 3 mm.
B: The difference in length is more than 3 mm and less than or equal to 7 mm.
C: The difference in length is more than 7 mm and less than or equal to 12 mm. Evaluation of Yellowing

Among the printing methods described above, only the third ink (softening liquid) was recorded on the recording fabric at 30 g/m², and a printed fabric dried by the above method was prepared. The surface of the printed image was measured for L*, a*, and b* using a colorimeter (FD-7, manufactured by Konica Minolta Inc.) and was used as a sample. In addition, a cloth that was dried in an oven at 160°C for 3 minutes without printing with a printer in the above-described method was prepared, L*, a*, and b* values were measured in the same manner, and the cloth was used as a reference. With respect to this reference, a color difference ΔE00 (ΔE2000) of the sample was calculated and determined by the following standards. Since the ink set 2 does not use the third ink, the color difference does not occur in the present evaluation.

### Determination Criteria

A: The color difference ΔE00 is less than or equal to 2.
B: The color difference ΔE00 is more than 2 and less than or equal to 7.

### Evaluation of Abrasion Resistance (Dry)

For the printed textiles prepared by using the above-described printing method, the image of the printed textiles was rubbed 10 times with shirting (white cotton cloth) using a crock meter (FI-306, manufactured by Tester Sangyo Co., Ltd.) with a load of 9N. Thereafter, for the region contaminated with the ink of the rubbed shirting, the optical density (OD, Status E) of black of the printed image was measured using a colorimeter (FD-7, manufactured by Konica Minolta Inc.) and determined according to the following criteria.

### Determination Criteria

S: The OD of black is less than or equal to 0.15.
A: The OD of black is more than 0.15 and less than or equal to 0.19.
B: The OD of black is more than 0.19 and less than or equal to 0.23.
C: The OD of black is more than 0.23 and less than or equal to 0.33.

### Evaluation of Abrasion Resistance (Wet)

For the printed textiles prepared by using the above-described printing method, the image of the printed textiles was rubbed 10 times with shirting (white cotton cloth) wetted with water in an amount equal to the weight of the cloth using a crock meter (FI-306, manufactured by Tester Sangyo Co., Ltd.) with a load of 9N. Thereafter, for the region contaminated with the ink of the rubbed shirting, the optical density (OD, Status E) of black of the printed image was measured using a colorimeter (FD-7, manufactured by Konica Minolta Inc.) and determined according to the following criteria.

### Determination Criteria

S: The OD of black is less than or equal to 0.26.
A: The OD of black is more than 0.26 and less than or equal to 0.31.
B: The OD of black is more than 0.31 and less than or equal to 0.45.
C: The OD of black is more than 0.45.

### Evaluation of Texture (Shear Hardness G)

For the printed textile samples created using the printing method described above, the texture was evaluated by a sensory evaluation. Specifically, five arbitrary evaluators were asked to answer either "the texture is comparable to that of the original fabric" or "the printed fabric is stiff and the original texture of the fabric is compromised," and the evaluation was performed according to the following criteria.

### Determination Criteria

A: Three or more evaluators responded that "the texture is comparable to the original texture of the fabric".
B: Two or fewer evaluators responded that "the texture is comparable to the original texture of the fabric".

### 4.3. Evaluation of Cleaning Performance by Set of Cleaning Liquid and Ink Jet Composition

For Ink Set 1 and Ink Set 2 shown in Tables 1 and 2, respectively, printing was performed on a recording medium under the conditions described in Table 6, using a modified Evo Tre 16 (manufactured by Seiko Epson Corporation). Main scans were performed a plurality of times on the same scanning area to form a 20 cm × 5 cm solid pattern image on the fabric, which is the recording medium. Subsequently, a 5 cm fabric was transported in the sub-scanning direction, printing was performed again on the same scanning area, and a solid pattern image of 20 cm × 10 cm was formed in the fabric as a medium to be recorded by two times of printing.

The printing was continuously performed. During this time, pure water was introduced into the cleaning unit of the apparatus, and the glue layer was cleaned with water throughout the printing process. This was repeated until the adhesive force of the glue layer formed at the surface of the fabric transport member decreased to 0.2 N or less. As the recording medium, a thin 100% cotton fabric, CN 1114 tn (manufactured by TNC Co., Ltd., trade name 1114 CM80 Satin COMBED combed yarn, plain weave), was used.

In addition, as for the belt adhesive, ATR1717 (adhesive, manufactured by ATR Corporation) 520 g and ATR1642 (adhesive, manufactured by ATR Corporation) 1200 g were mixed and prepared. The prepared belt adhesive was applied onto the belt according to the procedures in the user's manual to form a pressure sensitive adhesive layer. Before starting printing, it was confirmed that the adhesive force of the glue layer was 1.0 N/50mm or more using a push-pull gauge (FGP-1, manufactured by Nidec Corporation).

The adhesive force was measured as follows.

A strip-shaped (50×200 mm) cotton fabric (Taffetas. 100% COTTON (124 to 132 g/m²) manufactured by A. FERRARIO) was attached to the belt according to the user's manual procedures, and a pressure roller (press section) was reciprocated to sufficiently press the strip-shaped fabric onto the glue. The tension required to peel the pressed strip-shaped fabric vertically upwards was measured using a push-pull gauge (FGP-1, manufactured by Nidec Corporation). Measurements were taken at a total of three locations, selecting the most severely contaminated spot from each of the three divided areas across the width of the belt. The average value of the three measurements was taken as the adhesive force.

When the adhesive force of the glue layer decreased to 0.2 N or less, printing was interrupted, and manual wiping for glue cleaning was performed using the cleaning liquid of each example.

The cleaning cloth (wiping member) used for the cleaning operation was a cleaning cloth having a nylon fabric as the surface material and a polyester non-woven fabric as the core material. Specifically, the cleaning cloth was prepared as follows. A polyester non-woven fabric (manufactured by Shin-Kitakyushu Kogyo Co., Ltd., model number SW-7633, 20 cm width × 80 cm length × 1.5 mm thickness, white) was folded into 8 layers to form a core material of 10 cm width × 20 cm length. The core material was then wrapped with a nylon fabric (manufactured by Towa Corporation (TOWA), model number "Katame," 28 cm width × 40 cm length) to create a cleaning cloth with a nylon fabric as the surface material and a polyester non-woven fabric as the core material.

The cleaning cloth was impregnated with the cleaning liquid of each example listed in Tables 1 and 2 (to the extent that the cleaning liquid did not drip) and lightly wiped by hand to moisten the cleaning section so that the glue cleaning section was covered with a cleaning agent. Before getting dried, the moistened glue cleaning section was wiped twice with some force using the cleaning cloth. At that time, it was visually confirmed whether dirt or fluff was transferred to the cleaning cloth side. As dirt begins to transfer to the cleaning cloth, the adhesive force of the glue recovers and the stickiness increases, making it difficult to wipe with the cleaning cloth. Therefore, the cleaning cloth was impregnated with a generous amount of cleaning liquid, and wiping was performed while constantly keeping the cleaning section moist to maintain a wet state. During this time, a new surface of the cleaning cloth was used as necessary. The belt surface area cleaned during the cleaning operation was 80 cm wide × 30 cm deep, divided into two parts to the left and right of the belt centerline.

After completing the belt cleaning, the belt surface was left for 30 minutes to complete the glue cleaning operation.

### Evaluation of Fluff and Dirt Removal

The weight change of the nylon fabric, which is the surface material, was measured before and after the cleaning operation to evaluate the performance of fluff and dirt removal. The weight measurement was performed after drying and removing the cleaning agent from the nylon fabric. The evaluation criteria are as follows. As fluff and dirt are transferred to the nylon fabric, the weight of the nylon fabric increases, which means a larger weight change indicates higher removal performance.
A: Weight increase of 0.05 g or more (extremely good)
B: Weight increase of 0.02 g or more and less than 0.05 g (good)
C: Weight increase of 0.01 g or more and less than 0.02 g (slightly insufficient level)
D: Weight increase of less than 0.01 g (insufficient level)

### Evaluation of Pigment and Resin Stain Removal

After the cleaning operation, the concentration of contaminants transferred to the polyester non-woven fabric, which is the core material, was measured using OD values to evaluate the performance of pigment and resin stain removal. For OD value measurement, with the cleaning agent dried and removed from the polyester non-woven fabric, the average value of 10 measured spots was taken as the measurement value. The evaluation criteria are as follows.
A: OD value is 0.3 or more (extremely good)
B: OD value is 0.2 or more and less than 0.3 (good)
C: OD value is 0.1 or more and less than 0.2 (slightly insufficient level)
D: OD value is less than 0.1 (insufficient level)

### Evaluation of Odor

A sensory evaluation of odor was conducted in the area within 1 meter around the cleaning operation. Specifically, as a sensory test by 10 evaluators, odor determination was carried out using the following 6-level scale, and the average value was used for determination.

### Odor Evaluation Score: Sensory Test

0: Odorless
1: Slightly perceptible odor
2: Perceptible as a faint odor (not unpleasant)
3: Perceptible as a moderate odor (slightly unpleasant)
4: Perceptible as a strong odor (unpleasant)
5: Intense odor (very unpleasant)
The evaluation criteria are as follows.
A: Average value less than 2 (odor is not bothersome)
B: Average value 2 or more and less than 3 (odor is perceived but acceptable)
C: Average value 3 or more (odor is strong odor and unpleasant)

### Evaluation Of Fabric Lifting

After the cleaning operation, fabric (CN_1114_tn, a thin 100% cotton fabric, manufactured by TNC Co., Ltd., trade name 1114 CM80 Satin COMBED combed yarn) was attached to the belt, and printing was re-executed. Printing was repeated, and the presence or absence of fabric lifting was examined until the adhesive force decreased to 0.2 N/50 mm or less. The evaluation criteria are as follows.
A: No occurrence of fabric lifting (good)
B: Fabric lifting occurs only at the edges in the fabric width direction (outside the image area) (acceptable)
C: Fabric lifting occurs within the image area (insufficient)
When no fabric lifting occurred within the image area, uneven density was not observed in the image during image formation. When fabric lifting occurred within the image area, uneven density in the image was visually confirmed during image formation.

### 4.4. Evaluation Results

From Tables 1 and 2, it was found that when using a cleaning liquid containing a glycol ether compound, a polyoxyalkylene alkyl ether compound, and water, with a surface tension of 40 mN/m or less at 25°C, and an ink jet composition containing resin particles and water, that is, when using the set of cleaning liquid and ink jet composition in each example, contamination of the fabric transport member was reduced, the transportability of the fabric transport member was maintained well, and uneven density could be suppressed during image formation.

The present disclosure includes a configuration substantially the same as the configuration described in the embodiment, for example, a configuration having the same function, method, and result, or a configuration having the same purpose and effect. Further, the present disclosure includes configurations in which non-essential parts of the configuration described in the embodiments are replaced. In addition, the present disclosure includes configurations that achieve the same effects or configurations that can achieve the same objects as those of the configurations described in the embodiment. Further, the present disclosure includes configurations in which a known technology is added to the configurations described in the embodiments.

The following contents are derived from the above-described embodiments and modification examples.

The set is a set of an ink jet composition and a cleaning liquid, for use in an ink jet textile printing recording apparatus, in which the cleaning liquid contains a glycol ether compound, a polyoxyalkylene alkyl ether compound, and water, the ink jet composition contains resin particles and water, the cleaning liquid has a surface tension of 40 mN/m or less at 25°C, and the cleaning liquid is used for cleaning a fabric transport member of the ink jet textile printing recording apparatus.

According to the set, since the cleaning liquid contains a glycol ether compound and has a surface tension of 40 mN/m or less at 25°C, the cleaning liquid penetrates between the fabric transport member and the adhered ink jet composition layer, causing the solid components of the ink jet composition layer to swell, thus making it easier for the solid components to detach. Further, since the cleaning liquid contains a polyoxyalkylene alkyl ether compound, the detached solid components can be dispersed, and re-adhesion of the solid components can be suppressed. This reduces contamination of the fabric transport member while suppressing damage to the fabric transport member (for example, detachment of the glue from the belt substrate), maintains good transportability of the fabric transport member (adhesive force of the glue), and suppresses uneven density during image formation.

The ink jet composition used in the ink jet textile printing recording apparatus is required to have spreading properties on the recording medium when wet, in order to ensure hiding power with a small amount of ink droplets. However, when the ink jet composition is applied to the fabric, penetration or bleed-through is prone to occur (especially for mesh fabrics, which inherently have holes and are prone to bleed-through). Further, when the fabric contains chemical fibers, the fibers themselves are less likely to absorb ink, so the ink may pass directly through to the backside. Moreover, when the fabric is a thin plain-woven fabric, thin fabric, gaps are easily formed because the fibers are made of fine threads. Although the degree of penetration/bleed-through varies depending on the fiber type and fabric type, when the ink jet composition penetrates the fabric, the ink jet composition may adhere to the fabric transport member.

When the ink jet composition penetrates the fabric, and the ink jet composition contains resin particles, the resin components are fixed on the fabric transport member, contaminating the fabric transport member. This reduces the transportability of the fabric transport member (for example, the adhesive force of the glue), leading to issues such as uneven density during image formation (for example, fabric lifting occurs, causing stain-like marks (mottled density differences)). These issues can also arise from lint or fluff separating from the fabric and becoming fixed on the fabric transport member. Further, some cleaning liquids may cause damage to the fabric transport member (for example, detachment of the glue from the belt substrate).

According to the above set, it is easier to detach solid components adhered to the fabric transport member, and the detached solid components can be dispersed, and the re-adhesion of the solid components can be suppressed. This reduces contamination of the fabric transport member while suppressing damage to the fabric transport member (for example, detachment of the glue), maintains good transportability of the fabric transport member (for example, adhesive force of the glue), and suppresses uneven density during image formation.

In the above set, the fabric transport member may have a pressure sensitive adhesive layer on a surface thereof.

According to this set, even when a pressure sensitive adhesive layer such as a glue layer is provided to facilitate fixing the fabric to the fabric transport member, contamination of the fabric transport member can be reduced while suppressing detachment of the glue. This maintains good transportability of the fabric transport member (adhesive force by the adhesive layer (glue)) and suppresses uneven density during image formation.

In the above set, the fabric transport member may be an endless belt.

In the above set, the glycol ether compound may contain one or more glycol ether compounds having a surface tension of 40 mN/m or less at 25°C.

According to this set, it is easy to adjust the surface tension of the cleaning liquid to 40 mN/m or less at 25°C.

In the above set, the glycol ether compound having a surface tension of 40 mN/m or less may contain one or more selected from triethylene glycol monobutyl ether and 3-methoxy-3-methylbutanol.

According to this set, the glycol ether compound penetrates between the fabric transport member and the adhered ink jet composition layer, causing the solid components of the ink jet composition layer to swell, thus making it easier for the solid components to detach. In addition, when using 3-methoxy-3-methylbutanol, odor can be further reduced.

In the above set, the polyoxyalkylene alkyl ether compound may be polyethylene glycol mono-2-ethylhexyl ether.

In the above set, the cleaning liquid may further contain an antifoaming agent.

According to this set, foaming of the cleaning liquid can be further suppressed.

In the above set, the ink jet composition may be a colored ink jet composition containing a pigment.

According to this set, even when using a colored ink jet composition with relatively high solid components (resin, pigment), the transportability of the fabric transport member can be maintained well.

In the above set, the ink jet composition may be a functional liquid containing organopolysiloxane as the resin particles.

According to this set, the ink jet composition containing organopolysiloxane makes it easier to obtain better texture and color development (higher density) for recorded matter, and although problems with contamination of the fabric transport member are prone to occur, excellent cleaning performance can be achieved with the cleaning liquid.

In the above set, the ink jet composition containing organopolysiloxane may be a functional liquid substantially free of colorants.

According to this set, the ink jet composition is a so-called softening liquid or coating liquid, making it easier to obtain a better texture for recorded matter. On the other hand, and although problems with contamination of the fabric transport member are prone to occur, excellent cleaning performance can be achieved with the cleaning liquid.

The cleaning liquid is a cleaning liquid for use in an ink jet textile printing recording apparatus, in which the cleaning liquid contains a glycol ether compound, a polyoxyalkylene alkyl ether compound, and water, the cleaning liquid has a surface tension of 40 mN/m or less at 25°C, and the cleaning liquid is used for cleaning a fabric transport member of the ink jet textile printing recording apparatus, to which an ink jet composition is adhered.

According to the cleaning liquid, since the cleaning liquid contains a glycol ether compound and has a surface tension of 40 mN/m or less at 25°C, the cleaning liquid penetrates between the fabric transport member and the adhered ink jet composition layer, causing the solid components of the ink jet composition layer to swell, thus making it easier for the solid components to detach. Further, by containing a polyoxyalkylene alkyl ether compound, the detached solid components can be dispersed, and re-adhesion of the solid components can be suppressed. This reduces contamination of the fabric transport member while suppressing damage to the fabric transport member (detachment of the glue), maintains good transportability of the fabric transport member (adhesive force of the glue), and suppresses uneven density during image formation.

The cleaning method is a cleaning method for an ink jet textile printing recording apparatus, the cleaning method for a fabric transport member of the ink jet textile printing recording apparatus, in which the fabric transport member is configured such that an ink jet composition is adhered to a fabric by an ink jet method with the fabric placed on the fabric transport member, and the method includes a fabric transport member cleaning step of adhering a cleaning liquid to the fabric transport member and cleaning the fabric transport member.

According to the cleaning liquid, since the cleaning liquid contains a glycol ether compound and has a surface tension of 40 mN/m or less at 25°C, the cleaning liquid penetrates between the fabric transport member and the adhered ink jet composition layer, causing the solid components of the ink jet composition layer to swell, thus making it easier for the solid components to detach. Further, since the cleaning liquid contains a polyoxyalkylene alkyl ether compound, the detached solid components can be dispersed, and re-adhesion of the solid components can be suppressed. This reduces contamination of the fabric transport member while suppressing damage to the fabric transport member (detachment of the glue), maintains good transportability of the fabric transport member (adhesive force of the glue), and suppresses uneven density during image formation.

## Claims

1. A set of an ink jet composition and a cleaning liquid, for use in an ink jet textile printing recording apparatus, wherein
the cleaning liquid contains a glycol ether compound, a polyoxyalkylene alkyl ether compound, and water,
the ink jet composition contains resin particles and water,
the cleaning liquid has a surface tension of 40 mN/m or less at 25°C, and
the cleaning liquid is used for cleaning a fabric transport member of the ink jet textile printing recording apparatus.

2. The set according to claim 1, wherein
the fabric transport member has a surface on which a pressure sensitive adhesive layer is provided.

3. The set according to claim 1, wherein
the fabric transport member is an endless belt.

4. The set according to claim 1, wherein
the glycol ether compound includes a glycol ether compound having a surface tension of 40 mN/m or less at 25°C.

5. The set according to claim 4, wherein
the glycol ether compound having a surface tension of 40 mN/m or less includes at least one selected from triethylene glycol monobutyl ether and 3-methoxy-3-methylbutanol.

6. The set according to claim 1, wherein
the polyoxyalkylene alkyl ether compound is polyethylene glycol mono-2-ethylhexyl ether.

7. The set according to claim 1, wherein
the cleaning liquid further contains an antifoaming agent.

8. The set according to claim 1, wherein
the ink jet composition is a colored ink jet composition containing a pigment.

9. The set according to claim 1, wherein
the ink jet composition is a functional liquid containing organopolysiloxane as the resin particles.

10. The set according to claim 9, wherein
the ink jet composition containing organopolysiloxane is a functional liquid substantially free of colorants.

11. A cleaning liquid for use in an ink jet textile printing recording apparatus, wherein
the cleaning liquid contains a glycol ether compound, a polyoxyalkylene alkyl ether compound, and water,
the cleaning liquid has a surface tension of 40 mN/m or less at 25°C, and
the cleaning liquid is used for cleaning a fabric transport member of the ink jet textile printing recording apparatus, to which an ink jet composition is adhered.

12. A cleaning method for a fabric transport member of an ink jet textile printing recording apparatus, wherein
the fabric transport member is configured such that an ink jet composition is adhered to a fabric by an ink jet method with the fabric placed on the fabric transport member, and
the method comprises adhering a cleaning liquid to the fabric transport member and cleaning the fabric transport member.
